# EUROPÄISCHE PATENTSCHRIFT

(11) **EP 3 626 563 B1**
(45) Veröffentlichungstag und Bekanntmachung des Hinweises auf die Patenterteilung: **27.01.2021**
(21) Anmeldenummer: 18195253.2
(22) Anmeldetag: 18.09.2018
(51) Int. Cl.: B60T 13/68, B60T 8/17, B60T 8/32, B60T 15/04

(54) **STEUERVENTIL, ELEKTRONISCH STEUERBARES BREMSSYSTEM SOWIE VERFAHREN ZUM STEUERN DES ELEKTRONISCH STEUERBAREN BREMSSYSTEMS**
CONTROL VALVE, ELECTRONICALLY CONTROLLABLE BRAKE SYSTEM AND METHOD FOR CONTROLLING THE ELECTRONICALLY CONTROLLABLE BRAKE SYSTEM
SOUPAPE DE COMMANDE, SYSTÈME DE FREINAGE À COMMANDE ÉLECTRONIQUE AINSI QUE PROCÉDÉ DE COMMANDE DU SYSTÈME DE FREINAGE À COMMANDE ÉLECTRONIQUE

(43) Veröffentlichungstag der Anmeldung: 25.03.2020
(73) Patentinhaber: WABCO Europe BVBA, 1170 Brüssel (BE)
(72) Erfinder: COUPPEE, Ulrich, 31863 Coppenbrügge (DE); MÜLLER, Thomas, 30655 Hannover (DE); RIEDIGER-JANISCH, Karl-Heinz, 30455 Hannover (DE)
(74) Vertreter: Rabe, Dirk-Heinrich

(56) Entgegenhaltungen:
- EP-A1- 1 571 061
- WO-A1-2018/041386
- DE-A1-102008 031 327

## Beschreibung

Die Erfindung betrifft ein Steuerventil zum Aussteuern eines Federspeicher-Bremsdruckes gemäß dem Oberbegriff des Anspruches 1, sowie ein elektronisch steuerbares Bremssystem mit einem derartigen Steuerventil und ein Verfahren zum Steuern des elektronisch steuerbaren Bremssystems.

Herkömmliche elektronisch steuerbare Bremssysteme weisen den einzelnen Fahrzeugachsen zugeordnete Druckmodulatoren auf, die im Normalbetrieb elektrisch angesteuert werden, um eine bestimmte Betriebsbrems-Bremsvorgabe an den jeweiligen Rädern in einem Betriebsbremskreis umzusetzen. Die elektrische Steuerung erfolgt hierbei von einem Zentralmodul ausgehend, das die jeweiligen Druckmodulatoren über ein Steuersignal entsprechend der Betriebsbrems-Bremsvorgabe ansteuert.

Bei einem elektrischen Ausfall oder Defekt dieser elektrischen Ansteuerung, sind die Druckmodulatoren herkömmlicherweise mit einer pneumatischen Redundanz versehen. Dazu kann von einem Betriebsbremsventil, das die Betriebsbrems-Bremsvorgabe vom Fahrer aufnimmt, ein pneumatischer Steuerdruck an pneumatische Redundanz-Anschlüsse der jeweiligen Druckmodulatoren übertragen werden. Diese sorgen bei einem Ausfall oder einem Defekt bei der elektrisch gesteuerten Umsetzung der Bremsung für eine Luftmengenverstärkung des Steuerdruckes und ein Aussteuern eines Bremsdruckes an die jeweiligen Betriebsbremsen. Dadurch kann eine pneumatische Redundanz ausgebildet werden.

Weiterhin weisen derartige Bremssysteme neben dem Betriebsbremskreis einen Parkbremskreis auf, in dem über ein Parkbremsventil eine Parkbrems-Bremsvorgabe vom Fahrer aufgenommen werden kann. Infolge dessen wird vom Parkbremsventil ein Parkbrems-Steuerdruck an ein Steuerventil ausgegeben und darüber luftmgenverstärkt an Federspeicherteile der Radbremsen, vorzugsweise der Hinterachs-Radbremsen, als Federspeicher-Bremsdruck ausgegeben. Die Federspeicherteile sind bekanntermaßen derartig aufgebaut, dass diese die Radbremsen bei geringem Federspeicher-Bremsdruck durch eine Federvorspannung zugespannt und bei einem höheren Federspeicher-Bremsdruck entgegen der Federvorspannung geöffnet werden. Somit kann zumindest an den Hinterrädern eine Bremswirkung über einen Membranteil in Abhängigkeit des vom Hinterachs-Druckmodulator - elektrisch oder pneumatisch redundant - ausgegebenen Membran-Bremsdruckes sowie über den Federspeicherteil in Abhängigkeit des Federspeicher-Bremsdruckes erreicht werden.

Nachteilig hierbei ist, dass zur Ausbildung der pneumatischen Redundanz an der Hinterachse Druckmodulatoren nötig sind, die pneumatisch angesteuert werden können. Diese sind zum einen technisch aufwendig aufgebaut und zum anderen ist ein hoher Aufwand zur Verlegung von Druckleitungen zur Hinterachse zu betreiben, die lediglich für die Redundanz benötigt werden.

In WO 2014/161671 A1 und US 2014/0103237A1 ist jeweils eine Kombination aus einem Relaisventil und einem dem Relaisventil vorgeschalteten Parkbremsventil beschrieben, die getrennt voneinander angeordnet sind und sich gegenseitig beeinflussen können. Über das Relaisventil kann ein Federspeicherteil einer Radbremse gemäß einer Parkbrems-Bremsvorgabe angesteuert werden. Dem Parkbremsventil kann bei Änderung eines angeforderten Drucksollwertes infolge einer Parkbrems-Bremsvorgabe über eine Magnetventileinrichtung ein Vorratsdruck oder ein Atmosphärendruck gezielt vorgegeben werden, mit dem anschließend das Relaisventil angesteuert wird. Dazu wird bei einer Änderung des Drucksollwertes über das Parkbremsventil zunächst ein Initialpuls ausgeführt und an das Relaisventil geleitet und anschließend mit dem Zyklus für Belüften und Entlüften fortgefahren. Durch den Initialpuls wird der Drucksollwert wesentlich schneller erreicht als mit Impulsen konstanter Zykluszeit und konstantem Tastverhältnis

Die Offenlegungsschrift DE 10 2008 031327 A1 offenbart ein Steuerventil zum Aussteuern eines Federspeicher-Bremsdruckes in einem EBS-Bremssystem mit einer Sicherheitsvorkehrung zur Verwendung des vom Betriebsbremspedal ausgegebenen Steuerdruckes für eine Hilfsbremsung bei Ausfall der elektrischen Versorgung der elektropneumatischen Betriebsbremse.

Aufgabe der Erfindung ist daher, ein Steuerventil zum Aussteuern eines Federspeicher-Bremsdruckes bereitzustellen, mit dem eine komfortable, zuverlässige und einfache pneumatische Steuerung eines elektrisch steuerbaren Bremssystems auch im Redundanzfall ermöglicht werden kann. Aufgabe ist weiterhin ein elektrisch steuerbares Bremssystem sowie ein Verfahren zum Steuern dieses Bremssystems bereitzustellen. Die Unteransprüche geben bevorzugte Weiterbildung an.

Diese Aufgabe wird durch ein Steuerventil nach Anspruch 1 sowie ein elektronisch steuerbares Bremssystem und ein Verfahren nach den weiteren unabhängigen Ansprüchen gelöst. Die Unteransprüche geben bevorzugte Weiterbildungen an.

Erfindungsgemäß ist demnach vorgesehen, ein Steuerventil zum Aussteuern eines Federspeicher-Bremsdruckes an Federspeicherteile einer Hinterachs-Radbremse derartig zu erweitern, dass neben der pneumatischen Ansteuerung über einen von einem Parkbremsventil ausgegebenen Parkbrems-Steuerdruck über einen ersten Steuereingang auch eine pneumatische Ansteuerung des Steuerventils mit einem vom Betriebsbremsventil ausgegebenen und von einer Betriebsbrems-Bremsvorgabe abhängigen Betriebsbrems-Steuerdruck möglich ist, wobei der erste Steuereingang dazu - insbesondere im Redundanzfall - mit einem verstellbaren ersten Steuerraum verbindbar bzw. verbunden ist, wobei der erste Steuerraum über einen ersten Steuerkolben derartig mit den im Steuerventil angeordneten Steuermitteln in Wirkverbindung steht, dass der Federspeicher-Bremsdruck am Arbeitsausgang bei einer Verstellung des ersten Steuerraumes bzw. des ersten Steuerkolbens infolge einer Druckbeaufschlagung mit dem Betriebsbrems-Steuerdruck in Abhängigkeit des Betriebsbrems-Steuerdruckes und/oder des Parkbrems-Steuerdruckes einstellbar ist.

Dadurch wird bereits der Vorteil erreicht, dass die Federspeicherteile nicht nur in üblicher Weise in Abhängigkeit einer Parkbrems-Bremsvorgabe betätigt werden können, sondern ergänzend auch in Abhängigkeit einer über ein Betriebsbremsventil vorgegebenen Betriebsbrems-Bremsvorgabe. Das erfindungsgemäße Steuerventil sorgt somit dafür, dass neben dem Parkbrems-Steuerdruck auch der Betriebsbrems-Steuerdruck in einen entsprechenden Federspeicher-Bremsdruck umgesetzt wird, so dass darüber vorteilhafterweise eine redundante Ansteuerung der Hinterachs-Radbremsen - in dem Fall über den Federspeicherteil - stattfinden kann. Demnach kann die redundante pneumatische Ansteuerung eines Hinterachs-Druckmodulators entfallen. Vorteilhafterweise kann der Hinterachs-Druckmodulator dadurch einfacher aufgebaut werden, da nur noch eine elektrische Ansteuerung nötig ist. Für die pneumatische Redundanz an der Hinterachse kann dann auf Bestandteile der Parkbremse bzw. des Parkbremskreises zurückgegriffen werden, die bereits pneumatische Komponenten aufweist und eine pneumatische Ansteuerung ermöglicht.

Weiterhin ist erfindungsgemäß vorgesehen, dass der erste Steuerkolben weiterhin mit einem dritten Steuerraum in Wirkverbindung steht, wobei auf den ersten Steuerkolben
- bei einer Druckbeaufschlagung des ersten Steuerraumes mit dem Betriebsbrems-Steuerdruck eine erste Druckkraft in eine erste Richtung wirkt, und
- bei einer Druckbeaufschlagung des dritten Steuerraumes mit demselben Betriebsbrems-Steuerdruck eine zweite Druckkraft in eine der ersten Richtung entgegengesetzte zweite Richtung wirkt,
wobei der erste Steuerraum über ein schaltbares Bypass-Ventil mit dem dritten Steuerraum verbindbar ist zum Beaufschlagen beider Steuerräume mit demselben Betriebsbrems-Steuerdruck.

Dadurch kann vorteilhafterweise erreicht werden, dass die von der Betriebsbrems-Bremsvorgabe abhängige Aussteuerung des Federspeicher-Bremsdruckes kontrolliert bzw. moduliert werden kann. Demnach kann durch ein zusätzliches Heranziehen des dritten Steuerraumes die Verstellung des ersten Steuerkolbens und damit des ersten Steuerraumes gezielt beeinflusst werden, da der ersten Druckkraft aus dem ersten Steuerraum vom dritten Steuerraum ausgehend entgegenwirkt wird.

Demnach kann durch ein entsprechendes Umschalten des Bypass-Ventils zunächst festgelegt werden, ob eine unmittelbare bzw. starke Beeinflussung des Federspeicher-Bremsdruckes durch den Betriebsbrems-Steuerdruck erfolgen soll, indem der dritte Steuerraum abgekoppelt wird. In dem Fall hat lediglich der erste Steuerraum einen Einfluss auf den Betrieb bzw. die Einstellung des Steuerventils. Durch entsprechende Umschaltung des Bypass-Ventils kann aber auch eine leicht abgeschwächte Beeinflussung erfolgen, indem der dritte Steuerraum mit dem ersten Steuerraum verbunden wird. Dann wird der Betrieb des Steuerventils durch eine Kombination beider Steuerräume weniger stark beeinflusst, da ein Teil der ersten Druckkraft durch die zweite Druckkraft wieder aufgehoben wird. Somit kann durch das erfindungsgemäße Steuerventil vorteilhafterweise eine Charakteristik bzw. eine Übersetzung mit mehreren Betätigungsbereichen festgelegt werden, die beschreibt, welcher Federspeicher-Bremsdruck aus einem bestimmten Betriebsbrems-Steuerdruck infolge einer Betriebsbrems-Bremsvorgabe resultiert.

Vorzugsweise ist hierbei vorgesehen, dass der erste Steuerraum durch eine mit dem ersten Steuerkolben verbundene erste Wandung von dem dritten Steuerraum getrennt ist und der Betriebsbrems-Steuerdruck im ersten Steuerraum auf eine erste Oberfläche der ersten Wandung wirkt und der Betriebsbrems-Steuerdruck je nach Schaltstellung des Bypass-Ventils im dritten Steuerraum auf eine zweite Oberfläche der ersten Wandung wirkt. Dadurch kann in einfacher Weise das erfindungsgemäß vorgeschlagene Gegeneinanderwirken der Druckkräfte umgesetzt werden, wenn das Bypass-Ventil in die entsprechende Schaltstellung gebracht wird.

Vorzugsweise ist dazu weiterhin vorgesehen, dass die erste Oberfläche größer ist als die zweite Oberfläche, so dass bei einer Druckbeaufschlagung des ersten Steuerraumes mit dem Betriebsbrems-Steuerdruck eine erste Drucckraft auf den ersten Steuerkolben in die erste Richtung wirkt, die größer ist als eine zweite Druckkraft auf den ersten Steuerkolben in die zweite Richtung bei einer gleichzeitigen Druckbeaufschlagung des dritten Steuerraumes mit demselben Betriebsbrems-Steuerdruck. Dadurch kann vorteilhafterweise erreicht werden, dass bei einer Druckerhöhung des Betriebsbrems-Steuerdruckes eine Bewegung des Steuerkolbens in die erste Richtung bewirkt wird, woraus im erfindungsgemäßen Steuerventil vorzugsweise eine Reduzierung des Federspeicher-Bremsdruckes folgt, was eine erhöhte Bremswirkung zur Folge hat. Somit kann durch die Flächenverhältnisse gezielt eingestellt werden, in welche Richtung sich der erste Steuerkolben bei einer Druckveränderung bewegt und wie stark diese Bewegung erfolgt, d.h. wie stark der Federspeicher-Bremsdruck bei einer bestimmten Erhöhung des Betriebsbrems-Steuerdruckes ansteigt. Dadurch kann die Bremswirkung gezielt eingestellt werden.

Gemäß einer bevorzugten Weiterbildung ist vorgesehen, dass auf der zweiten Oberfläche der ersten Wandung ein Kolbenelement angeordnet ist, wobei das Kolbenelement derartig durch den dritten Steuerraum hindurch ragt, dass die zweite Oberfläche auf der ersten Wandung reduziert ist, wobei die zweite Druckkraft auf den ersten Steuerkolben bei einer Druckbeaufschlagung des dritten Steuerraumes mit dem Betriebsbrems-Steuerdruck lediglich durch das Einwirken des Betriebsbrems-Steuerdruckes auf die um das Kolbenelement reduzierte zweite Oberfläche bewirkt wird. Somit kann in einfaeher Weise ein bestimmtes Flächenverhältnis und damit ein bestimmter Zusammenhang zwischen eingehendem Betriebsbrems-Bremsdruck und ausgesteuertem Federspeicher-Bremsdruck eingestellt werden. Beispielsweise kann dadurch auch eingestellt werden, dass der Federspeicher-Bremsdruck bei der Hälfte eines maximalen Betriebsbrems-Steuerdruckes ebenfalls auf die Hälfte eines maximalen Federspeicher-Bremsdruckes angestiegen ist.

Vorzugsweise ist weiterhin vorgesehen, dass das Bypass-Ventil in Abhängigkeit eines festgelegten Grenzdruckes im ersten Steuerraum umschaltbar ist, wobei der erste Steuerraum mit dem dritten Steuerraum über das Bypass-Ventil verbunden ist, wenn bei einer Druckbeaufschlagung des ersten Steuerraumes mit dem Betriebsbrems-Steuerdruck der Betriebsbrems-Steuerdruck den festgelegten Grenzdruck überschreitet, und der erste Steuerraum über das Bypass-Ventil nicht mit dem dritten Steuerraum verbunden ist, wenn der Betriebsbrems-Steuerdruck den festgelegten Grenzdruck unterschreitet. Dadurch kann vorteilhafterweise ein Knickpunkt in der Charakteristik festgelegt werden, was beispielsweise dazu eingesetzt werden kann, einen bestimmten Punkt im Federspeicher-Bremsdruck schneller zu erreichen.

Beispielsweise kann der Grenzdruck auf zwischen 0,5 bar und 0,7 bar eingestellt werden. Bis zu diesem Betriebsbrems-Steuerdruck wird ein entsprechender Federspeicher-Bremsdruck vom Steuerventil ausgesteuert, der aufgrund der Federkennlinie des Federspeicherteils der Hinterachs-Radbremsen noch zu keiner oder nur geringen Veränderung der Bremswirkung aufgrund eines Leerweges führt. Übersteigt der Betriebsbrems-Steuerdruck den Grenzdruck wird aufgrund des dadurch ausgesteuerten Federspeicher-Bremsdruckes eine Bremswirkung erreicht. Um diesen Leerweg schneller zu überbrücken ist vorgesehen, dass der Betriebsbrems-Steuerdruck nur aus dem ersten Steuerraum aus auf den ersten Steuerkolben wirkt, d.h. keine abgeschwächte Verstellung des ersten Steuerkolbens erfolgt. Dadurch spürt der Fahrer bei einer Betätigung des Betriebsbremsventils recht schnell eine mit der Bremspedalbetätigung korrelierende Reaktion.

Vorzugsweise ist weiterhin vorgesehen, dass das Bypass-Ventil druckgesteuert umschaltbar ist, so dass keine weiteren Elektronik-Bauteile und Logik-Bausteine nötig sind. Vorzugsweise kann dazu vorgesehen sein, dass das Bypass-Ventil einen Bypass-Steuerkolben aufweist, wobei der Bypass-Steuerkolben in Abhängigkeit eines in einem Bypass-Steuerraum wirkenden Bypass-Steuerdruckes sowie in Abhängigkeit eines in einem Bypass-Druckraum wirkenden Umschaltdruckes verstellt werden kann zum Umschalten des Bypass-Ventils, wobei der Umschaltdruck dem Druck im ersten Steuerraum entspricht und der Bypass-Steuerkolben mit unterschiedlichen Bereichen in dem Bypass-Steuerraum und dem Bypass-Druckraum derartig liegt, dass der Bypass-Steuerdruck in entgegengesetzter Richtung zum Umschaltdruck auf den Bypass-Steuerkolben einwirkt. Eine Umstellung des Bypass-Ventils erfolgt somit in Abhängigkeit der tatsächlich vorliegenden Betriebsbrems-Bremsvorgabe.

Vorzugsweise ist weiterhin vorgesehen, dass der Bypass-Steuerkolben von einem Einlasssitz abhebt sobald der Umschaltdruck den Grenzdruck überschreitet und der erste Steuerraum dadurch mit dem dritten Steuerraum verbunden ist. Dadurch kann in einfacher Weise ein druckgesteuertes Verbinden bzw. Blockieren der beiden Steuerräume miteinander bzw. gegeneinander erfolgen.

Gemäß einer weiteren Ausbildung ist vorgesehen, dass der Bypass-Steuerraum über einen Bypass-Steuereingang mit dem Arbeitsausgang des Steuerventils verbunden ist zum Zuführen des Federspeicher-Bremsdruckes als Bypass-Steuerdruck. Dadurch kann die Gegenkraft auf der einen Seite des Bypass-Steuerkolbens direkt in Abhängigkeit des ausgesteuerten Federspeicher-Bremsdruckes verwendet werden, so dass eine Art Rückkopplung auf den eingesteuerten Betriebsbrems-Steuerdruck vorliegt.

Gemäß einer bevorzugten Weiterbildung ist vorgesehen, dass die Steuermittel durch einen verstellbaren zweiten Steuerraum sowie einen verstellbaren zweiten Steuerkolben ausgebildet sind, wobei der Parkbrems-Steuerdruck über den zweiten Steuereingang in den zweiten Steuerraum eingelassen werden kann und der zweite Steuerkolben durch ein Einwirken des Parkbrems-Steuerdruckes auf den zweiten Steuerkolben in eine erste Richtung und/oder eine der ersten Richtung entgegengerichtete zweite Richtung verstellbar ist. Somit kann eine einfache Kolbenverstellung erreicht werden, die für eine Luftmengenverstärkung des Parkbrems-Steuerdruckes zum Einstellen des Federspeicher-Bremsdruckes verwendet werden kann.

Die Steuermittel im Steuerventil sorgen somit dafür, dass sich in Abhängigkeit des Parkbrems-Steuerdruckes ein bestimmter Federspeicher-Bremsdruck am Arbeitsausgang des Steuerventils einstellt, was einer herkömmlichen Luftmengenverstärkung im Parkbremskreis entspricht. Dadurch dass der erste Steuerraum ebenfalls mit diesen Steuermitteln zusammenwirkt, kann auch der jeweilige in den ersten Steuerraum eingelassene Betriebsbrems-Steuerdruck Einfluss auf den Federspeicher-Bremsdruck nehmen und somit auch in Abhängigkeit davon eine pneumatisch redundante Ansteuerung der Hinterachs-Radbremsen erfolgen.

Vorzugsweise erfolgt dies dadurch, dass, dass der zweite Steuerraum durch eine am verstellbaren zweiten Steuerkolben angeordnete dritte Wandung begrenzt ist, wobei die dritte Wandung gegenüber dem Ventilgehäuse derartig beweglich ist, dass der zweite Steuerkolben durch ein Einwirken des Parkbrems-Steuerdruckes auf die dritte Wandung verstellt werden kann. Dadurch wird ein einfacher Aufbau der Steuermittel zum Einstellen des Federspeicher-Bremsdruckes erreicht.

Vorzugsweise ist weiterhin vorgesehen, dass der erste Steuerkolben mit dem zweiten Steuerkolben derartig in Wirkverbindung steht, dass der zweite Steuerkolben durch eine Verstellung des ersten Steuerkolbens zumindest bereichsweise mitgenommen wird. Dadurch wird vorteilhafterweise mit einfachen Mitteln eine Wirkverbindung zwischen den Steuermitteln des Steuerventils, die für eine Umsetzung der Parkbremsung sorgen, und dem verstellbaren ersten Steuerraum, der durch den jeweiligen Betriebsbrems-Steuerdruck beeinflusst wird, geschaffen. Somit kann der Betriebsbrems-Steuerdruck im Redundanzfall für eine Anpassung des Federspeicher-Bremsdruck sorgen, indem auf die Steuermittel des Steuerventils zurückgegriffen wird, so dass ein einfacher Aufbau des Steuerventils mit dieser zusätzlichen Funktionalität (pneumatische Redundanz) erreicht wird.

Der erste Steuerkolben und der zweite Steuerkolben können dazu gemäß einer Ausführung fest miteinander verbunden sein, so dass keine Relativbewegung zwischen beiden Steuerkolben zugelassen wird. Gemäß einer Alternative kann jedoch vorgesehen sein, dass der erste Steuerkolben in seinem unteren Bereich mit einem ersten Schaft in einen hohlzylindrisch ausgeführten zweiten Schaft des zweiten Steuerkolbens eintaucht. Dabei ist der erste Schaft im Bereich einer Schaftverengung des zweiten Schafts in seinem Durchmesser bereichsweise reduziert. Dadurch kann sich der erste Steuerkolben in einem gewissen Bereich relativ zum zweiten Steuerkolben bewegen. Dieser Bereich ist dabei derartig festgelegt, dass der zweite Steuerkolben im nicht-redundanten Bremsbetrieb bewegt werden kann, ohne von dem ersten Steuerkolben beeinflusst zu werden. Dadurch können Reibungsverluste, die durch den im nicht-redundanten Betrieb nicht benötigten ersten Steuerkolben auftreten, vermieden werden. Sobald der erste Schaft insbesondere mit einer unteren Anlagefläche gegen die Schaftverengung des zweiten Schafts gelangt, was beispielsweise bei einer Erhöhung des Betriebsbrems-Steuerdruckes im redundanten Betrieb der Fall ist, bewegen sich beide Steuerkolben zusammen, so dass auf die Steuermittel des Steuerventils zur Anpassung des Federspeicher-Bremsdruck zurückgegriffen werden kann.

Gemäß einer bevorzugten Weiterbildung ist außerdem vorgesehen, dass der erste Steuerraum von einer gegenüber einem Ventilgehäuse beweglichen ersten Wandung sowie einer an dem Ventilgehäuse festgelegten bzw. damit fest verbundenen zweiten Wandung begrenzt ist, wobei der erste Steuerkolben derartig mit der ersten Wandung verbunden ist, dass der erste Steuerkolben und der damit in Wirkverbindung stehende zweite Steuerkolben durch ein Druckerhöhen im ersten Steuerraum in eine erste Richtung gedrängt werden. Dadurch kann in einfacher Weise eine vom Betriebsbrems-Steuerdruck abhängige Verstellung des ersten Steuerraums und somit auch der beiden Steuerkolben erreicht werden.

Vorzugsweise ist der zweite Steuerraum dabei relativ zum ersten Steuerraum derartig angeordnet, dass der zweite Steuerkolben und der damit in Wirkverbindung stehende erste Steuerkolben bei einem Druckerhöhen im zweiten Steuerraum in die zweite Richtung gedrängt werden, wenn der erste Steuerraum und/oder der dritte Steuerraum mit der Atmosphäre verbunden sind. Dadurch kann vorteilhafterweise erreicht werden, dass mit ein und demselben Steuerventil ein gegenüber dem Parkbrems-Steuerdruck invertierter Betriebsbrems-Steuerdruck mit den Steuermitteln des Steuerventils dennoch in einen dazu proportionalen Federspeicher-Bremsdruck umgewandelt werden kann. Dies wird in einfacher Weise gerade dadurch erreicht, dass eine Druckerhöhung in dem jeweiligen Steuerraum zu einer Kolbenbewegung in entgegengesetzte Richtung führt.

Bevorzugt kann dies erreicht werden, indem der zweite Steuerraum - wie auch der erste Steuerraum - ebenfalls von der am Ventilgehäuse festgelegten zweiten Wandung begrenzt ist, wobei der zweite Steuerkolben bei einer Druckerhöhung im zweiten Steuerraum von der zweiten Wandung weg in die zweite Richtung und der erste Steuerkolben bei einer Druckerhöhung im ersten Steuerraum von der zweiten Wandung weg in die erste Richtung gedrückt werden. Dadurch kann diese entgegengesetzte Beweglichkeit bei Druckerhöhung durch einfache Mittel erzielt werden.

Gemäß einer bevorzugten Weiterbildung ist vorgesehen, dass der erste Steuerraum und der zweite Steuerraum über die Steuerkolben derartig miteinander zusammenwirken, dass sich am Arbeitsausgang ein Federspeicher-Bremsdruck einstellt, der abhängig von dem im zweiten Steuerraum vorherrschenden Parkbrems-Steuerdruck und/oder dem im ersten Steuerraum vorherrschenden Betriebsbrems-Steuerdruck ist, insbesondere je nachdem, welche den Steuerdrücken zugeordnete Bremsvorgabe die Höhere ist. Demnach findet durch das Steuerventil vorteilhafterweise eine Selbstregulierung statt, d.h. eine aktuell wirkende Bremsung des Fahrzeuges über die Federspeicherteile der Hinterachs-Radbremsen z.B. im geparkten Zustand bei entsprechender Parkbrems-Bremsvorgabe kann durch eine redundant vorgegebene Betriebsbrems-Bremsvorgabe, die eine geringere Bremswirkung vorgibt, nicht überschrieben werden. Liegt jedoch eine dosierte Parkbrems-Bremsvorgabe vor und eine redundante Betriebsbrems-Bremsvorgabe bei einem elektrischen Defekt oder einem Ausfall, so wird die Betriebsbrems-Bremsvorgabe umgesetzt, falls diese zu einer größeren Bremswirkung führt als die dosierte Parkbrems-Bremsvorgabe.

Gemäß einer bevorzugten Weiterbildung ist vorgesehen, dass als Steuermittel weiterhin ein durch eine Druckfeder vorgespannter, axial beweglicher Ventilkörper vorgesehen ist, wobei der Arbeitsausgang je nach axialer Verstellung des Ventilkörpers entweder über einen Druckraum mit einem Entlüftungsanschluss zum Reduzieren des Federspeicher-Bremsdruckes oder mit einem Versorgungsanschluss zum Erhöhen des Federspeicher-Bremsdruckes verbindbar ist, wobei der zweite Steuerkolben den Ventilkörper in Abhängigkeit des Parkbrems-Steuerdruckes und/oder des Betriebsbrems-Steuerdruckes axial verstellen kann. Dadurch wird in einfacher Weise ein vom jeweiligen Steuerdruck abhängiges einstellen des Federspeicher-Bremsdruckes ermöglicht.

Zur redundanten Steuerung des Federspeicher-Bremsdruckes in Abhängigkeit des jeweiligen Betriebsbrems-Steuerdruckes ist vorteilhafterweise vorgesehen, dass das Steuerventil mit einem schaltbaren Umschaltventil derartig zusammenwirkt, dass der erste Steuerraum mit einem Betriebsbremsventil verbunden werden kann zum Vorgeben eines Betriebsbrems-Steuerdruckes in dem ersten Steuerraum oder mit einer Atmosphäre verbunden werden kann zum Entlüften des ersten Steuerraumes, wobei das Umschaltventil im Steuerventil integriert ist oder dem ersten Steuereingang des Steuerventils vorgeschaltet ist. Erst dadurch wird der jeweilige Betriebsbrems-Steuerdruck in den ersten Steuerraum geleitet und kann mittelbar auf die Steuermittel einwirken. In einer weiteren Schaltstellung des Umschaltventils kann erreicht werden, dass die Atmosphäre mit dem ersten Steuerraum verbunden ist zum Entlüften des ersten Steuerraumes. Dies ist dann der Fall, wenn der Betriebsbrems-Steuerdruck keinen Einfluss auf den Federspeicher-Bremsdruck haben soll, d.h. insbesondere dann, wenn das Bremssystem normal funktioniert und somit keine redundante pneumatische Ansteuerung der Hinterachs-Radbremsen erforderlich ist.

Erfindungsgemäß ist weiterhin ein elektronisch steuerbares Bremssystem vorgesehen, das Vorderachs-Radbremsen, Hinterachs-Radbremsen mit einem Federspeicherteil und einem Membranteil, ein elektropneumatisch steuerbaren Vorderachs-Druckmodulator zur Ausgabe eines Vorderachs-Bremsdruckes an die Vorderachs-Radbremsen, ein elektronisch steuerbaren Hinterachs-Druckmodulator zur Ausgabe eines Membran-Bremsdruckes an die Membranteile der Hinterachs-Radbremsen, ein Zentralmodul und ein elektropneumatisches Betriebsbremsventil aufweist, wobei das Betriebsbremsventil ausgebildet ist, in Abhängigkeit einer Betriebsbrems-Bremsvorgabe ein elektrisches Betriebsbrems-Betätigungssignal an das Zentralmodul auszugeben,
wobei das Zentralmodul signalleitend mit dem Vorderachs-Druckmodulator und dem Hinterachs-Druckmodulator verbunden ist zum Übertragen von dem Betriebsbrems-Betätigungssignal abhängigen Steuersignalen an die Druckmodulatoren,
wobei das Betriebsbremsventil weiterhin ausgebildet ist, in Abhängigkeit der Betriebsbrems-Bremsvorgabe einen pneumatischen Betriebsbrems-Steuerdruck auszugeben, wobei der Vorderachs-Druckmodulator im Redundanzfall über einen Redundanz-Anschluss mit einem Vorderachs-Betriebsbrems-Steuerdruck ansteuerbar ist,
wobei das Bremssystem weiterhin ein Parkbremsventil aufweist und das Parkbremsventil in Abhängigkeit einer Parkbrems-Bremsvorgabe einen Parkbrems-Steuerdruck an einen zweiten Steuereingang eines Steuerventils ausgibt, wobei das Steuerventil in Abhängigkeit des Parkbrems-Steuerdruckes einen Federspeicher-Bremsdruck an einem Arbeitsausgang des Steuerventils einstellen kann und der Arbeitsausgang des Steuerventils mit Federspeicherteilen der Hinterachs-Radbremsen verbunden ist zum Einstellen des Federspeicher-Bremsdruckes auch an den Federspeicherteilen der Hinterachs-Radbremsen. Erfindungsgemäß ist das Steuerventil zur Einstellung des Federspeicher-Bremsdruckes das erfindungsgemäß beschriebene Steuerventil, wobei das Betriebsbremsventil pneumatisch mit einem ersten Steuereingang des Steuerventils verbindbar ist zum Übertragen des Betriebsbrems-Steuerdruckes an das Steuerventil und zum Einstellen eines Federspeicher-Bremsdruckes an den Federspeicherteilen der Hinterachs-Radbremsen in Abhängigkeit des Parkbrems-Steuerdruckes und/oder des Betriebsbrems-Steuerdruckes.

Vorzugsweise ist dabei vorgesehen, dass das Zentralmodul signalleitend mit einem im Steuerventil integrierten oder dem ersten Steuereingang vorgeschalteten Umschaltventil verbunden ist zum wahlweisen Verbinden des Betriebsbremsventils mit dem ersten Steuerraum des Steuerventils oder der Atmosphäre mit dem ersten Steuerraum des Steuerventils, wobei im Normalbetrieb ohne Vorliegen eines Defektes oder eines Ausfalls bei der elektrischen Ansteuerung des Hinterachs-Druckmodulators über ein an das Umschaltventil übermitteltes Umschaltsignal vorgebbar ist, dass die Atmosphäre mit dem ersten Steuerraum verbunden ist und sonst das Betriebsbremsventil mit dem ersten Steuerraum verbunden ist. Darüber kann in vorteilhafter Weise die erfindungsgemäße Funktion des Steuerventils für einen redundanten Bremsbetrieb über die Federspeicherteile verwendet werden.

Vorzugsweise ist weiterhin vorgesehen, dass das Betriebsbremsventil einkanalig ausgeführt ist und der dem Vorderachs-Druckmodulator vom Betriebsbremsventil zugeführte Vorderachs-Steuerdruck über eine Abzweigung auch dem ersten Steuereingang des Steuerventils zuführbar ist oder das Betriebsbremsventil zweikanalig ausgeführt ist, wobei ein erster Kanal mit dem Redundanz-Anschluss des Vorderachs-Druckmodulators verbunden ist zur pneumatischen Ansteuerung des Vorderachs-Druckmodulators mit dem Vorderachs-Betriebsbrems-Steuerdruck und ein zweiter Kanal mit dem ersten Steuereingang des Steuerventils verbunden ist zur Übertragung eines im Betriebsbremsventil erzeugten Redundanz-Steuerdruckes an das Steuerventil. Dadurch kann der der Betriebsbrems-Bremsvorgabe entsprechende Betriebsbrems-Steuerdruck in einfacher Weise an das Steuerventil vorgegeben werden, um die Betriebsbrems-Bremsvorgabe auch redundant über die Federspeicherteile umsetzen zu können. Die einkanalige Ausführung hat dabei den Vorteil, dass das Betriebsbremsventil einfacher und kostengünstiger ausgeführt werden, da lediglich ein Kanal nötig ist. Die zweikanalige Ausführung ermöglicht allerdings, dass die Vorderachse und die Hinterachse im Bedarfsfall unabhängig voneinander pneumatisch redundant gebremst werden können.

Im erfindungsgemäßen Verfahren zum Steuern eines erfindungsgemäßen elektrisch steuerbaren Bremssystems ist damit vorgesehen, das Betriebsbremsventil bei Feststellen eines elektrischen Defektes oder eines Ausfalls bei der elektrischen Ansteuerung der Hinterachs-Radbremsen durch den Membranteil mit dem ersten Steuerraum zu verbinden, so dass ein vom Betriebsbrems-Steuerdruck abhängiger Federspeicher-Bremsdruck an denFederspeicherteilen der Hinterachs-Radbremsen eingestellt werden kann, wobei der Federspeicher-Bremsdruck in Abhängigkeit einer Schaltstellung eines Bypass-Ventils im Steuerventil vorgegeben wird, wobei je nach Schaltstellung des Bypass-Ventils unterschiedliche Druckkräfte auf den ersten Steuerkolben wirken.

Vorzugsweise ist dabei vorgesehen, dass das Bypass-Ventil im Steuerventil in Abhängigkeit eines festgelegten Grenzdruckes im ersten Steuerraum umgeschaltet wird, wobei der erste Steuerraum mit dem dritten Steuerraum über das Bypass-Ventil verbunden wird, wenn bei einer Druckbeaufschlagung des ersten Steuerraumes mit dem Betriebsbrems-Steuerdruck der Betriebsbrems-Steuerdruck den festgelegten Grenzdruck überschreitet, und der erste Steuerraum über das Bypass-Ventil nicht mit dem dritten Steuerraum verbunden wird, wenn der Betriebsbrems-Steuerdruck den festgelegten Grenzdruck unterschreitet. Dadurch kann eine gezielte Charakteristik eingestellt werden, in der bis zum Grenzdruck eine große Veränderung des Federspeicher-Bremsdruckes bei einer Veränderung des Betriebsbrems-Steuerdruckes vorliegt, d.h. eine hohe Steigung, und sonst ein starker Unterschied in der Steigung, z.B. eine-geringere Steigung.

Vorzugsweise ist weiterhin vorgesehen, dass das Zentralmodul dem Umschaltventil im Normalbetrieb ohne Feststellen eines elektrischen Defektes oder eines Ausfalls bei der elektrischen Ansteuerung der Hinterachs-Radbremsen durch den Membranteil über das Umschaltsignal vorgibt, dass der erste Steuerraum mit der Atmosphäre verbunden wird. Dadurch kann festgelegt werden, dass im Normalbetrieb des Bremssystems die Funktion des Steuerventils nicht beeinflusst werden soll.

Die Erfindung wird im Folgenden anhand mehrerer Figuren näher erläutert. Es zeigen:
- Fig. 1: ein elektronisch steuerbares Bremssystem mit einer pneumatisch steuerbaren Parkbremse;
- Fig. 2: eine Detailansicht eines erfindungsgemäßen Steuerventils mit integriertem Bypass-Ventil in dem elektronisch steuerbaren Bremssystem gemäß Fig. 1;
- Fig. 3: eine Betätigungskennlinie für eine redundante Bremsbetätigung über das Steuerventil gemäß Fig. 2; und
- Fig. 4: ein Flussdiagram des erfindungsgemäßen Verfahrens.

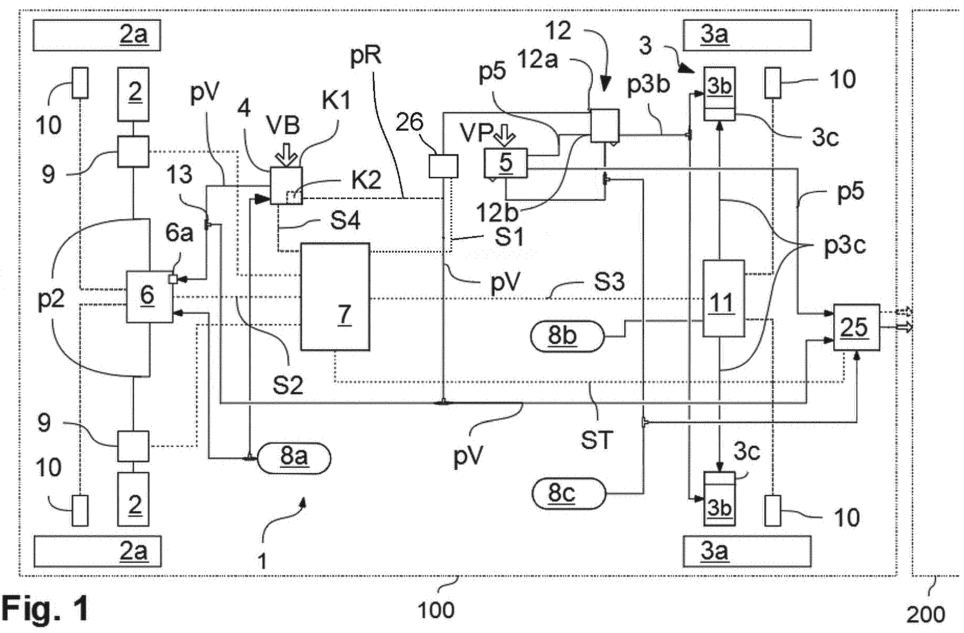

Gemäß Fig. 1 ist ein Fahrzeug-Gespann aus einem Zugfahrzeug 100 und einem daran angehängten Anhänger 200 dargestellt. Das Zugfahrzeug 100 weist ein zumindest teilweise elektrisch steuerbares zweikreisiges Bremssystem 1 auf, dessen Vorderachs- und Hinterachs-Radbremsen 2, 3 durch manuelle Betätigung eines Betriebsbremsventils 4 sowie eines Parkbremsventils 5 betätigt werden können.

An den Vorderachs-Radbremsen 2 kann bei einer Betätigung des Betriebsbremsventils 4 mit einer bestimmten Betriebsbrems-Bremsvorgabe VB elektrisch oder pneumatisch gesteuert ein der Vorgabe entsprechender Vorderachs-Bremsdruck p2 aufgebaut werden. Dazu wird in Abhängigkeit der Höhe der Betriebsbrems-Bremsvorgabe VB vom pneumatischen Teil des Betriebsbremsventils 4 ein Vorderachs-Betriebsbrems-Steuerdruck pV an ein Vorderachs-Druckregelmodul 6 über einen pneumatischen Redundanz-Anschluss 6a übertragen.

Weiterhin wird dem Vorderachs-Druckregelmodul 6 auf elektronischem Wege von einem Zentralmodul 7 ein Vorderachs-Steuersignal S2 übermittelt. Das Vorderachs-Steuersignal S2 wird aus einem Betriebsbrems-Betätigungssignal S4 gebildet, das vom elektronischen Teil des Betriebsbremsventils 4 in Abhängigkeit der Betriebsbrems-Bremsvorgabe VB an das Zentralmodul 7 ausgegeben und darin weiterverarbeitet wird. Das Zentralmodul 7 kann beispielsweise eine Achslastverteilung oder weitere übergeordnete Funktionen durchführen und in Abhängigkeit davon das Vorderachs-Steuersignal S2 erzeugen. In Abhängigkeit des Vorderachs-Steuersignals S2 wird im Vorderachs-Druckmodulator 6 ein Vorderachs-Bremsdruck p2 für die Vorderachs-Radbremsen 2 erzeugt, der zu einer Abbremsung des Zugfahrzeuges 100 gemäß der Betriebsbrems-Bremsvorgabe VB sowie ggf. der übergeordneten Funktionen führt. Dies erfolgt in bekannter Weise durch eine entsprechende elektronische Ansteuerung einer im Vorderachs-Druckmodulator 6 integrierten Einlassventil-Auslassventil-Kombination (nicht dargestellt), mit der Druckmittel aus einem ersten Druckmittelvorrat 8a entsprechend druckgemindert an die Vorderachs-Radbremsen 2 geleitet wird.

Der Vorderachs-Bremsdruck p2 kann über zusätzliche ABS-Steuerventile 9, die vor den Vorderachs-Radbremsen 2 angeordnet sind, modifiziert werden. Dadurch kann einem über Raddrehzahlsensoren 10 festgestelltem Blockieren oder drohendem Blockieren der Vorderräder 2a entgegengewirkt werden. Die Ansteuerung der ABS-Steuerventile 9 erfolgt gemäß dieser Ausführung vom Zentralmodul 7 aus, in dem eine entsprechende intelligente ABS-Steuerlogik integriert ist.

Im Normalbetrieb findet eine über das Zentralmodul 7 elektrisch gesteuerte Betätigung der Vorderachs-Radbremsen 2 statt. Fällt die elektronische Ansteuerung der Vorderachs-Druckmodulatoren 6 aus irgendeinem Grund aus, beispielsweise weil die Signalübertragung zwischen dem Zentralmodul 7 und dem Vorderachs-Druckmodulator 6 unterbrochen ist und/oder das Zentralmodul 7 und/oder der Vorderachs-Druckmodulator 6 einen Ausfall in der elektrischen Ebene aufweist, so können die Vorderachs-Radbremsen 2 über den pneumatischen Redundanz-Anschluss 6a in Abhängigkeit des pneumatischen Vorderachs-Betriebsbrems-Steuerdruckes pV auch pneumatisch gesteuert werden. Dazu wird der vom Betriebsbremsventil 4 ausgegebene Vorderachs-Betriebsbrems-Steuerdruck pV im Vorderachs-Druckmodulator 6 entsprechend luftmengenverstärkt und als Vorderachs-Bremsdruck p2 an die Vorderachs-Radbremsen 2 ausgegeben. Dadurch wird eine pneumatisch gesteuerte Rückfallebene für die Vorderachs-Radbremsen 2 ausgebildet, sodass das Zugfahrzeug 100 auch bei elektrischen Ausfällen noch über die Vorderräder 2a sicher abgebremst werden kann.

Die Hinterachs-Radbremsen 3 zu Abbremsung der Hinterräder 3a sind als kombinierte Federspeicher-Membranzylinder ausgeführt, d.h. sie weisen einen Federspeicherteil 3b und einen Membranteil 3c auf. Für eine herkömmliche Betriebsbremsfunktion kann ein Membran-Bremsdruck p3c von einem Hinterachs-Druckmodulator 11 entsprechend druckgemindert aus einem zweiten Druckmittelvorrat 8b vorgegeben werden, um den Membranteil 3c der Hinterachs-Radbremsen 3 zu betätigen. Der Hinterachs-Druckmodulator 11 unterscheidet sich hierbei von dem Vorderachs-Druckmodulator 6 dadurch, dass kein Redundanz-Anschluss für eine pneumatische Ansteuerung vorgesehen ist. Demnach kann der Hinterachs-Druckmodulator 11 lediglich elektrisch angesteuert werden, wie im Normalfall auch der Vorderachs-Druckmodulator 6.

Insofern ist der Hinterachs-Druckmodulator 11 vergleichbar zur elektrischen Ebene des Vorderachs-Druckmodulators 6 aufgebaut, so dass über ein von dem Zentralmodul 7 in Abhängigkeit der Betriebsbrems-Bremsvorgabe VB ausgegebenes Hinterachs-Steuersignal S3 von dem Hinterachs-Druckmodulator 11 über eine Einlass-Auslassventil-Kombination ein entsprechender Membran-Bremsdruck p3c erzeugt und ausgegeben werden kann. Eine blockiergeschützte Anpassung des Membran-Bremsdruckes p3c in Abhängigkeit der Messung der Drehzahlsensoren 10 an den Hinterrädern 3a erfolgt an der Hinterachse ohne zusätzliche ABS-Steuerventile bereits im Hinterachs-Druckmodulator 11. Insofern ist der Membran-Bremsdruck p3c bereits durch die ABS-Funktion angepasst.

Da der Hinterachs-Druckmodulator 11 im Gegensatz zum Vorderachs-Druckmodulator 6 keine pneumatische Redundanz aufweist, ist erfindungsgemäß vorgesehen, eine pneumatische Redundanz über den Federspeicherteil 3b der Hinterachs-Radbremsen 3 auszubilden. Der Federspeicherteil 3b funktioniert derartig, dass die Radbremsen 3 bei einem Reduzieren eines auf den Federspeicherteil 3b wirkenden Federspeicher-Bremsdrucks p3b automatisch zugespannt werden bzw. sich die Bremswirkung an den Hinterrädern 3a erhöht. Wird der Federspeicher-Bremsdruck p3b erhöht, wird der Federspeicherteil 3b entgegen eine Federvorspannung weiter geöffnet und eine Bremswirkung an den Hinterrädern 3a dadurch verringert bzw. ganz aufgehoben.

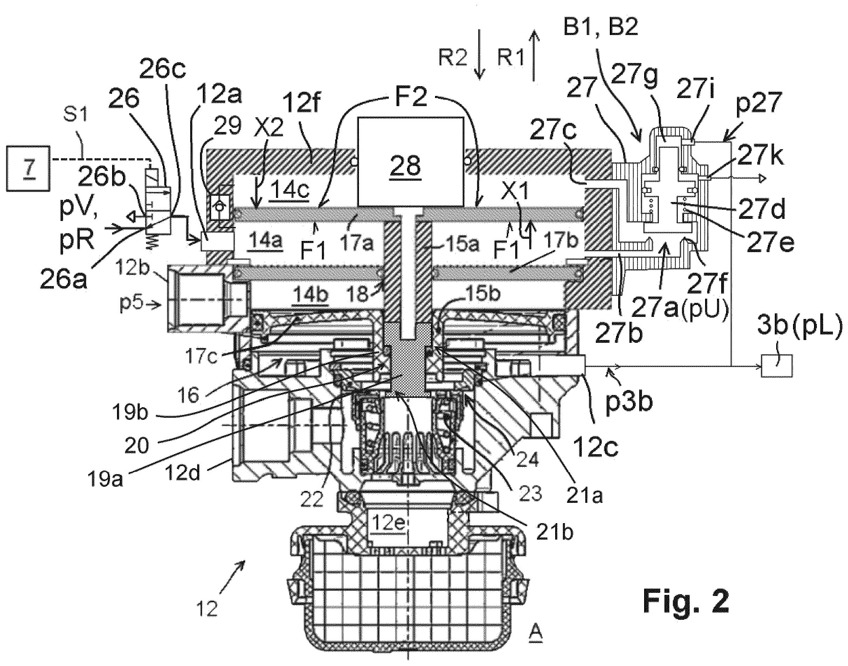

Herkömmlicherweise werden die Federspeicherteile 3b der Hinterachs-Radbremsen 3 für eine Parkbremsfunktion im Fahrzeug 100 verwendet, die über das Parkbremsventil 5 in einem Parkbremskreis gesteuert wird. Wird demnach vom Fahrer über das pneumatische Parkbremsventil 5 eine bestimmte Parkbrems-Bremsanforderung VP vorgegeben, so wird von dem Parkbremsventil 5 ein dementsprechender Parkbrems-Steuerdruck p5 ausgegeben und an einen zweiten Steuereingang 12b eines Steuerventils 12 übertragen. Das Steuerventil 12 sorgt für eine Luftmengenverstärkung des Parkbrems-Steuerdrucks p5, sodass ein Federspeicher-Bremsdruck p3b über einen Arbeitsausgang 12c (s. Fig. 2) an den Federspeicherteil 3b der Hinterachs-Radbremse 3 ausgegeben wird, der zu einer der Parkbrems-Bremsanforderung VP entsprechenden Abbremsung des Fahrzeuges 100 führt.

Gibt der Fahrer dabei über die Parkbrems-Bremsanforderung VP vor, dass das Fahrzeug abgestellt werden soll, d.h. die volle Bremswirkung über die Federspeicherteile 3b erreicht werden soll, so wird die Leitung zwischen dem Parkbremsventil 5 und dem Steuerventil 12 entlüftet, so dass ein dem Atmosphärendruck entsprechender Parkbrems-Steuerdruck p5 an dem zweiten Steuereingang 12b des Steuerventils 12 anliegt. Die Federvorspannung sorgt damit für ein Zuspannen der Federspeicherteile 3b. Befindet sich das Parkbremsventil 5 in einer Fahrtstellung oder einer beliebigen Zwischenstellung, so wird aus dem dritten Druckmittelvorrat 8c ein entsprechend hoher Parkbrems-Steuerdruck p5 an den zweiten Steuereingang 12b vorgegeben, so dass die Federspeicherteile 3b über den Federspeicher-Bremsdruck p3b entgegen der Federvorspannung kontinuierlich geöffnet werden.

Das Steuerventil 12 wird gemäß der Erfindung in einem ersten Schritt derartig erweitert, dass neben der beschriebenen Parkbremsfunktion auch eine redundante pneumatische Ansteuerung der Hinterachs-Radbremsen 3 - in dem Fall über den Federspeicherteil 3b - erfolgen kann. Dies erfolgt insbesondere dann, wenn der Hinterachs-Druckmodulator 11 und/oder das Zentralmodul 7 und/oder die elektrische Verbindung dazwischen einen elektrischen Defekt oder Ausfall aufweist, das heißt eine Bremsung der Hinterräder 3a nicht mehr elektrisch gesteuert durch das Zentralmodul 7 stattfinden kann.

Dazu wird der vom pneumatischen Teil des Betriebsbremsventils 4 bei einer manuellen Bremsung ausgegebene Vorderachs-Betriebsbrems-Steuerdruck pV über eine Abzweigung 13 und ein Schaltventil 26 an einen ersten Steuereingang 12a des Steuerventils 12 geführt, wobei das Steuerventil 12 einen zum Vorderachs-Betriebsbrems-Steuerdruck pV inversen und luftmengenverstärkten Federspeicher-Bremsdruck p3b erzeugt und über den Arbeitsausgang 12c (s. Fig. 2) an den Federspeicherteil 3b der Radbremsen 3 ausgibt. Die Luftmengenverstärkung des Parkbrems-Steuerdruckes p5 sowie des Vorderachs-Betriebsbrems-Steuerdruckes pV erfolgt im Steuerventil 12 durch eine Druckversorgung vom dritten Druckmittelvorrat 8c aus.

Alternativ kann auch vorgesehen sein, dem Steuerventil 12 über das Schaltventil 26 statt dem Vorderachs-Betriebsbrems-Steuerdruck pV einen der Betriebsbrems-Bremsvorgabe VB entsprechenden Redundanz-Betriebsbrems-Steuerdruck pR zuzuführen, der im Betriebsbremsventil 4 vergleichbar zum Vorderachs-Betriebsbrems-Steuerdruck pV erzeugt und ausgegeben wird. Das Betriebsbremsventil 4 ist dann zweikanalig aufgebaut, wobei über einen ersten Kanal K1 der Vorderachs-Betriebsbrems-Steuerdruck pV zur pneumatischen Ansteuerung des Vorderachs-Druckmodulators 6 und über einen zweiten Kanal K2 der Redundanz-Betriebsbrems-Steuerdruck pB zur pneumatischen Ansteuerung des Steuerventils 12 erzeugt und ausgegeben werden. In Fig. 1 ist diese optionale Ausführung schematisch durch einen weiteren gestrichelten Kanal K2 am Betriebsbremsventil 4 sowie eine pneumatische Steuerleitung vom Betriebsbremsventil 4 zu der Leitung, die zum ersten Steuereingang 12a des Steuerventils 12 führt, dargestellt. In dieser gestrichelten Ausführung entfällt dann die Zuführung des Vorderachs-Betriebsbrems-Steuerdruck pV über die Abzweigung 13 zum Schaltventil 26. Im Folgenden wird lediglich die redundante Ansteuerung des Steuerventils 12 über den Vorderachs-Betriebsbrems-Steuerdruck pV beschrieben, die in entsprechender Weise auf den Redundanz-Betriebsbrems-Steuerdruck pR übertragen werden kann.

Somit übernimmt das erfindungsgemäße Steuerventil 12 in gewissen Situationen zusätzlich die Aufgabe der Inversion und Luftmengenverstärkung des Vorderachs-Betriebsbrems-Steuerdruckes pV, so dass darüber eine redundante pneumatische Ansteuerung der Hinterachs-Radbremsen 3 erfolgen kann. Um der Parkbrems-Bremsvorgabe VP eine höhere Priorität einzuräumen, ist das Steuerventil 12 gemäß dieser Ausführungsform derartig ausgeführt, dass die Umsetzung der Parkbrems-Bremsvorgabe VP bzw. die Luftmengenverstärkung des Parkbrems-Steuerdruckes p5 Vorrang vor der Invertierung und Luftmengenverstärkung des Vorderachs-Betriebsbrems-Steuerdruckes pV hat.

Weiterhin ist in dieser Ausführungsform vorgegeben, dass eine pneumatische Ansteuerung des Steuerventils 12 mit dem Vorderachs-Betriebsbrems-Steuerdruck pV nur dann zu einer Ausgabe eines entsprechenden Federspeicher-Bremsdruckes p3b an den Federspeicherteil 3b führt, wenn eine elektrische Ansteuerung über den Hinterachs-Druckmodulator 11 und eine entsprechende Ausgabe des Membran-Bremsdruckes p3c fehlschlägt. Andernfalls bleibt eine Übertragung des Vorderachs-Betriebsbrems-Steuerdruckes pV an das Steuerventil 12 über den ersten Steuereingang 12a ohne Auswirkungen auf den Federspeicherteil 3b der Hinterachs-Radbremsen 3.

Um all dies zu erreichen, ist das in Fig. 2 dargestellte Steuerventil 12 vorgesehen. Das Steuerventil 12 besteht aus den Steuereingängen 12a, 12b, über die der Vorderachs-Betriebsbrems-Steuerdruck pV bzw. der Redundanz-Betriebsbrems-Steuerdruck pR bzw. der Parkbrems-Steuerdruck p5 vorgegeben werden, und dem Arbeitsausgang 12c, der den Federspeicher-Bremsdruck p3b an den Federspeicherteil 3b ausgibt. Weiterhin ist ein Versorgungsanschluss 12d vorgesehen, der mit dem dritten Druckmittelvorrat 8c verbunden ist und für eine Bereitstellung des Druckmittels an das Steuerventil 12 sorgt. Über einen Entlüftungsanschluss 12e kann das Steuerventil 12 mit der Atmosphäre A verbunden werden.

Das Steuerventil 12 weist als Funktionselemente weiterhin drei Steuerräume 14a, 14b, 14c und zwei Steuerkolben 15a, 15b auf, wobei die beiden Steuerkolben 15a, 15b miteinander wirkverbunden sind und sich wie noch näher beschrieben in gewissen Situationen gegenseitig zumindest bereichsweise mitnehmen können. Durch eine axiale Bewegung der zwei Steuerkolben 15a, 15b kann ein Druckraum 16 des Steuerventils 12 mit dem Versorgungsanschluss 12d oder dem Entlüftungsanschluss 12e verbunden werden. Der Druckraum 16 ist weiterhin mit dem Arbeitsausgang 12c verbunden, so dass je nach axialer Stellung der beiden Steuerkolben 15a, 15b eine Druckerhöhung (über 12d) oder eine Druckreduzierung (über 12e) des am Arbeitsausgang 12c anliegenden Federspeicher-Bremsdruckes p3b erfolgen kann. Dies erfolgt nach dem folgenden Prinzip:
Ein erster Steuerkolben 15a ist mit einer ersten Wandung 17a verbunden und in einer Öffnung 18 in einer zweiten feststehenden Wandung 17b des Steuerventils 12 axial verschiebbar gelagert. Die Öffnung 18 ist ebenso wie die erste Wandung 17a abgedichtet, so dass zwischen der ersten Wandung 17a und der zweiten Wandung 17b sowie einem Ventilgehäuse 12f des Steuerventils 12 ein erster Steuerraum 14a ausgebildet wird, der durch eine axiale Verschiebung des ersten Steuerkolbens 15a und der damit verbundenen ersten Wandung 17a vergrößert und verkleinert werden kann. Der erste Steuerraum 14a ist mit dem ersten Steuereingang 12a des Steuerventils 12 verbunden, um das Druckmittel mit dem Vorderachs-Betriebsbrems-Steuerdruck pV in den ersten Steuerraum 14a leiten zu können.

Die Verbindung zwischen dem ersten Steuerraum 14a und dem ersten Steuereingang 12a bzw. dem Betriebsbremsventil 4 und dem ersten Steuereingang 12a kann über ein Schaltventil 26, beispielsweise ein elektrisch steuerbares 3/2-Wegeventil, gezielt blockiert werden. Das Schaltventil 26 ist dazu entweder als Bestandteil des Steuerventils 12 zwischen dem ersten Steuereingang 12a und dem ersten Steuerraum 14a angeordnet oder ist - wie auch in Fig. 1 vorgesehen - dem Steuerventil 12 bzw. dem ersten Steuereingang 12a vorgeschaltet. In Fig. 2 ist schematisch ein dem Steuerventil 12 vorgeschaltetes 3/2-Wegeventil als Schaltventil 26 dargestellt. Die im Folgenden beschriebene Funktion des Schaltventils 26 lässt sich in analoger Weise auf das im Steuerventil 12 integrierte Schaltventil 26 übertragen.

Über einen ersten Schaltventil-Eingang 26a wird dem Schaltventil 26 das Druckmittel mit dem Vorderachs-Betriebsbrems-Steuerdruck pV bzw. dem Redundanz-Betriebsbrems-Steuerdruck pR vom Betriebsbremsventil 4 zugeführt. Ein zweiter Schaltventil-Eingang 26b ist mit der Atmosphäre A verbunden. Über einen Schaltventil-Ausgang 26c kann je nach Schaltstellung des Schaltventils 26 das Druckmittel mit dem Vorderachs-Betriebsbrems-Steuerdruck pV bzw. dem Redundanz-Betriebsbrems-Steuerdruck pR bzw. dem Atmosphärendruck an den ersten Steuerraum 14a ausgegeben werden.

Das Schaltventil 26 kann elektrisch gesteuert umgeschaltet werden, um den Vorderachs-Betriebsbrems-Steuerdruck pV freizugeben oder zu blockieren. Das Schaltventil 26 ist dazu mit dem Zentralmodul 7 signalleitend verbunden. Das Zentralmodul 7 gibt im Normalbetrieb ohne Vorliegen eines elektrischen Fehlers über ein Umschaltsignal S1 den Befehl zum Umschalten des Schaltventils 26. Das Umschalten des Schaltventils 26 erfolgt dabei vorzugsweise bei jeder Bremsbetätigung, d.h. immer dann, wenn eine bestimmte Betriebsbrems-Bremsvorgabe VB am Betriebsbremsventil 4 vorliegt. Das Umschalten erfolgt derartig, dass ein Einlassen des Vorderachs-Betriebsbrems-Steuerdruckes pV in den ersten Steuerraum 14a blockiert wird, wenn eine Bremsbetätigung vorliegt. Stattdessen wird der erste Steuerraum 14a durch die Stellung des Schaltventils 26 mit der Atmosphäre A verbunden. Dadurch steht der erste Steuerraum 14a unter Atmosphärendruck, so dass bei einer Bremsbetätigung im Normalbetrieb erreicht wird, dass der Vorderachs-Betriebsbrems-Steuerdruck pV die Funktion des Steuerventils 12 nicht beeinflusst. Bei unbetätigtem Betriebsbremsventil 4 ist das Schaltventil 26 derartig umgeschaltet, dass das Druckmittel mit dem Vorderachs-Betriebsbrems-Steuerdruck pV über den ersten Steuereingang 12a in den ersten Steuerraum 14a eingelassen wird. Da das Betriebsbremsventil 4 in der unbetätigten Stellung aber einen Atmosphärendruck vorgibt, ist der erste Steuerraum 14a auch dann mit der Atmosphäre A verbunden, so dass sich auch dadurch keine Beeinflussung des Steuerventils 12 ergibt.

Fällt das Zentralmodul 7 aus oder liegt ein anderer elektrischer Fehler im Hinterachs-Druckmodulator 11 oder bei der Ansteuerung des Hinterachs-Druckmodulators 11 vor, so wird bei einer Bremsbetätigung kein Umschaltsignal S1 an das Schaltventil 26 übertragen. Das Schaltventil 26 ist dann automatisch derartig geschaltet, dass der Vorderachs-Betriebsbrems-Steuerdruck pV, der dann größer als der Atmosphärendruck ist, über den Schaltventil-Ausgang 26c auch bei einer Bremsbetätigung in den ersten Steuerraum 14a eingelassen wird. Die Funktion des Steuerventils 12 kann also wie weiter unten beschrieben durch den Vorderachs-Betriebsbrems-Steuerdruck pV beeinflusst werden, wenn ein elektrischer Ausfall oder Defekt vorliegt.

Oberhalb der ersten Wandung 17a und unterhalb des Ventilgehäuses 12f wird weiterhin ein dritter Steuerraum 14c definiert. Dieser kann über ein Bypass-Ventil 27 mit dem ersten Steuerraum 14a verbunden werden, um im redundanten Bremsbetrieb bei einem Einlassen des Vorderachs-Betriebsbrems-Steuerdruckes pV in den ersten Steuerraum 14a ein bestimmtes vorgegebenes Verhalten des Steuerventils 12 zu ermöglichen. Dies wird wie folgt umgesetzt:
Der erste Steuerraum 14a des Steuerventils 12 ist über einen ersten Verbindungskanal 27b mit einem Bypass-Druckraum 27a verbunden, so dass das im ersten Steuerraum 14a befindliche Druckmittel auch in den Bypass-Druckraum 27a gelangt. Der Bypass-Druckraum 27a ist in der in Fig. 2 gezeigten geöffneten ersten Schaltstellung B1 des Bypass-Ventils 27 über einen zweiten Verbindungskanal 27c auch mit dem dritten Steuerraum 14c verbunden, so dass das im ersten Steuerraum 14a befindliche Druckmittel auch in den dritten Steuerraum 14c gelangt. Das Bypass-Ventil 27 weist weiterhin einen Bypass-Steuerkolben 27d auf, der durch eine Bypass-Feder 27e in die erste Richtung R1 verstellt ist, wodurch der Bypass-Steuerkolben 27d in der geöffneten ersten Schaltstellung B1 des Bypass-Ventils 27 von einem Einlasssitz 27f abhebt. Dadurch wird die Verbindung zwischen dem ersten und dem dritten Steuerraum 14a, 14c geschaffen.

Der Bypass-Steuerkolben 27d kann druckgesteuert entgegen der Federkraft der Bypass-Feder 27e verstellt werden, indem ein entsprechend hoher Bypass-Steuerdruck p27 über einen Bypass-Steuereingang 27i in einen Bypass-Steuerraum 27g eingelassen wird. Der Bypass-Steuereingang 27i ist dabei mit dem Arbeitsausgang 12c des Steuerventils 12 verbunden, so dass der Federspeicher-Bremsdruck p3b als Bypass-Steuerdruck p27 auch im Bypass-Steuerraum 27g wirksam ist. Je höher somit der ausgesteuerte Federspeicher-Bremsdruck p3b ist, umso höher steigt auch der Bypass-Steuerdruck p27, wodurch der Bypass-Steuerkolben 27d gegen die Federkraft der Bypass-Feder 27e verstellt wird. Weiterhin wird der Bypass-Steuerkolben 27d aber auch gegen einen von unten auf den Bypass-Steuerkolben 27d wirkenden Umschaltdruck pU im Bypass-Druckraum 27a verstellt, wobei der Umschaltdruck pU dem im ersten Steuerraum 14a des Steuerventils 12 wirkenden Druck (Atmosphärendruck oder Vorderachs-Betriebsbrems-Steuerdruck pV bzw. Redundanz-Betriebsbrems-Steuerdruck pR) entspricht. Somit wirkt die durch den Bypass-Steuerdruck p27 im Bypass-Steuerraum 27g bewirkte Druckkraft auf den oberen Bereich des Bypass-Steuerkolbens 27d gegen die Federkraft der Bypass-Feder 27e und die durch den Umschaltdruck pU im ersten Steuerraum 14a bewirkte Druckkraft auf den unteren Bereich des Bypass-Steuerkolbens 27d.

Gelangt der Bypass-Steuerkolben 27d bei entsprechend eingestellten Kräfteverhältnissen gegen den Einlasssitz 27f, wird die Verbindung zwischen dem ersten Steuerraum 14a und dem dritten Steuerraum 14c unterbrochen. Das Bypass-Ventil 27 befindet sich dann in der geschlossenen zweiten Schaltstellung S2. Um neben der Bypass-Feder 27e, dem Bypass-Steuerdruck p27 und dem Umschaltdruck pU keine weiteren Einflüsse auf die Bewegung des Bypass-Steuerkolbens 27d zu verursachen, wird der Bypass-Steuerkolben 27d über einen Bypass-Auslass 27k entlastet.

Das Bypass-Ventil 27 ist dabei derartig abgestimmt, dass der Bypass-Steuerkolben 27d bei einem unbetätigten Parkbremsventil 5, d.h. bei einem hohen Federspeicher-Bremsdruck p3b bzw. Bypass-Steuerdruck p27 von beispielsweise 8,5bar, und im nicht-redundanten Bremsbetrieb, d.h. bei funktionierendem Zentralmodul 7 und Atmosphärendruck im ersten Steuerraum 14a, am Einlasssitz 27f anliegt. Die Bypass-Feder 27e ist somit vollständig gespannt. Damit wird das Steuerventil 12 im nicht-redundanten Bremsbetrieb durch den ersten Steuerkolben 15a nicht beeinflusst.

Die Funktion des Steuerventils 12 im nicht-redundanten Bremsbetrieb ist dabei wie folgt: Eine dritte Wandung 17c des zweiten Steuerkolbens 15b definiert zusammen mit der feststehenden zweiten Wandung 17b einen zweiten Steuerraum 14b. In diesen ragt in diesem Ausführungsbeispiel der erste Steuerkolben 15a hindurch. In seinem unteren Bereich taucht der erste Steuerkolben 15a mit einem ersten Schaft 19a in einen hohlzylindrisch ausgeführten zweiten Schaft 19b des zweiten Steuerkolbens 15b ein. Dabei ist der erste Schaft 19a im Bereich einer Schaftverengung 20 des zweiten Schafts 19b in seinem Durchmesser bereichsweise reduziert. Dadurch kann sich der erste Steuerkolben 15a in einem gewissen Bereich relativ zum zweiten Steuerkolben 15b bewegen. Dieser Bereich ist dabei derartig festgelegt, dass der zweite Steuerkolben 15b im nicht-redundanten Bremsbetrieb aufgrund der Parkbrems-Bremsvorgabe VP bewegt werden kann, ohne von dem ersten Steuerkolben 15a beeinflusst zu werden, z.B. durch Reibung der Dichtungen. Sobald der erste Schaft 19a bei seiner Bewegung mit einer ersten oberen Anlagefläche 21a oder einer zweiten unteren Anlagefläche 21b gegen die Schaftverengung 20 des zweiten Schafts 19b gelangt, bewegen sich beide Steuerkolben 15a, 15b zusammen wie weiter unten näher ausgeführt.

Der zweite Steuerraum 14b ist mit dem zweiten Steuereingang 12b verbunden, so dass der am zweiten Steuereingang 12b anliegende Parkbrems-Steuerdruck p5 auch im zweiten Steuerraum 14b wirkt. Je nach Höhe des Parkbrems-Steuerdruckes p5 wird der zweite Steuerkolben 15b über die dritte Wandung 17c (im nicht-redundanten Bremsbetrieb unabhängig von dem ersten Steuerkolben 15a) axial nach oben in eine erste Richtung R1 oder unten in eine zweite Richtung R2 verschoben. Die Verstellung des zweiten Steuerkolbens 15b in die erste Richtung R1 nach oben kann hierbei entweder aufgrund eines Ansaugens (bei niedrigem Parkbrems-Steuerdruck p5) aus dem zweiten Steuerraum 14b oder durch eine nicht dargestellte Feder erfolgen, die den zweiten Steuerkolben 15b im entlüfteten Zustand in die erste Richtung R1 drängt.

Bei betätigtem Parkbremsventil 5 (s. Fig. 1) ist der zweite Steuereingang 12b zunächst entlüftet, so dass ein dem Atmosphärendruck entsprechender Parkbrems-Steuerdruck p5 im zweiten Steuerraum 14b vorliegt. Dadurch ergibt sich der in Fig. 2 dargestellte Zustand, in dem der zweite Steuerkolben 15b aufgrund der geringen Druckwirkung auf die dritte Wandung 17c axial nach oben verstellt ist. Dadurch wird der Druckraum 16 mit dem Entlüftungsanschluss 12e verbunden und der Arbeitsausgang 12c ebenfalls entlüftet, d.h. es liegt ein geringer Federspeicher-Bremsdruck p3b vor, so dass die Federspeicherteile 3b der Hinterachs-Radbremsen 3 durch die Federvorspannung zugespannt werden. Gleichzeitig wird der Bypass-Steuerkolben 27d durch die Bypass-Feder 27e nach oben verstellt, da der Bypass-Steuerdruck p27 zu gering ist, um gegen die Federkraft zu wirken. Im ersten und im dritten Steuerraum 14a, 14c herrschen damit gleiche Drücke, wobei aufgrund der Schaltstellung des Schaltventils 26 im nicht-redundanten Bremsbetrieb dauerhaft der Atmosphärendruck vorliegt. Der erste Steuerkolben 15a und der zweite Steuerkolben 15b werden dadurch also nicht beeinflusst.

Bei steigendem Parkbrems-Steuerdruck p5 im zweiten Steuerraum 14b aufgrund einer Rücknahme der Betätigung des Parkbremsventils 5 (s. Fig. 1) wird der zweite Steuerkolben 15b über die dritte Wandung 17c axial nach unten gedrückt, bis dieser mit seinem unteren Bereich ab einer bestimmten axialen Verstellung abdichtend gegen einen Ventilkörper 22 gelangt, so dass die Verbindung zwischen dem Arbeitsausgang 12c und dem Entlüftungsanschluss 12e über den Druckraum 16 gegenüber dem Zustand in Fig.2 getrennt wird. Der Druckraum 16 ist dann nur noch mit dem Arbeitsausgang 12c verbunden. Der Federspeicher-Bremsdruck p3b wird dadurch gehalten. Der erste Steuerkolben 15a wird dabei nicht mitgenommen, da die Schaftverengung 20 zwischen den beiden Anlageflächen 21a, 21b des sich bisher nicht bewegenden ersten Schafts 19a verstellt wird.

Bei einer weiteren Druckerhöhung des Parkbrems-Steuerdruckes p5 drückt der zweite Steuerkolben 15b den Ventilkörper 22 gegen die Kraft einer Druckfeder 23 nach unten, wodurch ein Durchlass 24 öffnet, so dass eine Verbindung zwischen dem Versorgungsanschluss 12d und dem Arbeitsausgang 12c über den Druckraum 16 hergestellt wird. Infolge dessen erhöht sich der Federspeicher-Bremsdruck p3b und der Federspeicherteil 3b wird entgegen der Federkraft geöffnet, so dass die Hinterachs-Radbremsen 3 keine oder weniger Bremswirkung entfalten. Die Schaftverengung 20 gelangt hierbei bis zum Erreichen eines maximalen Parkbrems-Steuerdruckes p5 nicht gegen die untere Anlagefläche 21a des ersten Schafts 19a, so dass der erste Steuerkolben 15a bei einer Druckerhöhung bis zum maximalen Parkbrems-Steuerdruck p5 nicht mitgenommen wird.

Der Bypass-Steuerkolben 27d wird aufgrund der Druckerhöhung wie beschrieben gegen die Kraft der Bypass-Feder 27e in die zweite Richtung R2 verstellt, so dass die Verbindung zwischen beiden Steuerräumen 14a, 14c langsam getrennt wird bis der Bypass-Steuerkolben 27d auf dem Einlasssitz 27f aufliegt. Im ersten und im dritten Steuerraum 14a, 14c herrscht bei einem nicht-redundanten Bremsbetrieb aber weiterhin jeweils der Atmosphärendruck über das Bremsventil 4 (erster Steuerraum 14a) bzw. ein Rückschlagventil 29 (dritter Steuerraum 14c), so dass auch dann noch keine Beeinflussung der Bremswirkung auftritt.

Aufgrund der Anordnung der unteren Anlagefläche 21a am ersten Schaft 19a sowie der Schaftverengung 20 am zweiten Schaft 19b kann die soeben beschriebene Steuerfunktion, d.h. die Verbindung des Entlüftungsanschlusses 12e mit dem Arbeitsausgang 12c zum Zuspannen des Federspeicherteils 3b bzw. die Verbindung des Versorgungsanschlusses 12d mit dem Arbeitsausgang 12c zum Öffnen des Federspeicherteils 3b ebenso auch durch die Änderung des Druckes im ersten Steuerraum 14a erfolgen. Dies kann bei einem Ausbleiben des Umschaltsignals S1 (redundanter Bremsbetrieb) wie oben bereits angedeutet geschehen:
Eine Druckerhöhung im ersten Steuerraum 14a infolge einer redundanten Bremsanforderung bewirkt eine axiale Verstellung des ersten Steuerkolbens 15a in die erste Richtung R1 nach oben. Dabei wird der zweite Steuerkolben 15b ebenfalls mit in die erste Richtung R1 gezogen, sobald die untere Anlagefläche 21b des ersten Schafts 19a durch die Druckerhöhung im ersten Steuerraum 14a von unten an der Schaftverengung 20 anliegt. Dies ist z.B. dann der Fall, wenn bei einer redundanten Bremsanforderung über das Betriebsbremsventil 4 keine Betätigung des Parkbremsventils 5 und somit ein hoher Druck im zweiten Steuerraum 14b vorliegt oder eine geringere Betätigung über das Parkbremsventil 5 (Parkbrems-Bremsvorgabe VP) als über das Betriebsbremsventil 4 (Betriebsbrems-Bremsvorgabe VB) vorliegt.

Dadurch kann eine Invertierung des Vorderachs-Betriebsbrems-Steuerdruckes pV stattfinden, da bei einem hohen Vorderachs-Betriebsbrems-Steuerdruck pV der zweite Steuerkolben 15b vom Ventilkörper 22 abhebt, wenn er vom ersten Steuerkolben 15a mitgenommen wird, und der Arbeitsausgang 12c damit mit dem Entlüftungsanschluss 12e verbunden ist und somit über einen niedrigen Federspeicher-Bremsdruck p3b die Federspeicherteile 3b zugespannt werden können. Bei einem niedriger werdenden Vorderachs-Betriebsbrems-Steuerdruck pV hingegen wird das Volumen im ersten Steuerraum 14a geringer, so dass eine Verbindung des Arbeitsausgangs 12c mit dem Versorgungsanschluss 12d infolge einer axialen Verstellung der beiden Steuerkolben 15a, 15b nach unten in die zweite Richtung R2 hergestellt wird, was zu einem steigenden Federspeicher-Bremsdruck p3b und damit zu einem Lösen der Federspeicherteile 3b der Hinterachs-Radbremsen 3 führt. Somit kann aufgrund der Anordnung der beiden Steuerkolben 15a, 15b zueinander eine gegensätzliche Verstellung des zweiten Steuerkolbens 15a, 15b bewirkt werden, wenn der Betriebsbrems-Steuerdruck pV bzw. der Parkbrems-Steuerdruck p5 erhöht werden.

Durch die soeben beschriebene Funktionalität des Steuerventils 12 kann erreicht werden, dass trotz einer redundanten Betriebsbrems-Bremsvorgabe VB (kein Umschaltsignal S1) eine entsprechend vorliegende Parkbrems-Bremsvorgabe VP tatsächlich zu einer Abbremsung bzw. einem Halten des Fahrzeuges 100 im z.B. abgestellten Zustand führt. Dies wird durch die umgekehrt wirkenden Steuerkolben 15a, 15b sowie die wirkende Druckfeder 23 erreicht. Liegt z.B. bei einer vollen Parkbrems-Bremsvorgabe VP ein niedriger Parkbrems-Steuerdruck p5 im zweiten Steuerraum 14b vor, so wäre der Arbeitsausgang 12c zum Lösen der Federspeicherteile 3b mit dem Versorgungsanschluss 12d zu verbinden. D.h. der erste Steuerkolben 15a müsste für eine axiale Bewegung des zweiten Steuerkolbens 15b nach unten in Fig. 2 sorgen. Dies kann, wenn überhaupt, nur dann erfolgen, wenn im ersten Steuerraum 14a ein sehr geringer Vorderachs-Betriebsbrems-Steuerdruck pV vorliegt, da sonst ein axiales Anheben des ersten Steuerkolbens 15astattfindet. Wird von einem niedrigen Vorderachs-Betriebsbrems-Steuerdruck pV - entsprechend einer geringen redundanten Betriebsbrems-Bremsvorgabe VB - ausgegangen, der nicht unter den Atmosphärendruck, der im zweiten Steuerraum 14b aktuell vorliegt, sinken kann, ist dieser nicht in der Lage, eine ausreichend hohe Druckkraft zum Zusammendrücken der Druckfeder 23 zu sorgen. Die Druckfeder 23 ist dementsprechend auszulegen. Dadurch wird ein Lösen der Federspeicherteile 3b unterbunden.

Liegt umgekehrt keine Parkbrems-Bremsvorgabe VP vor, so wird der zweite Steuerkolben 15b im Normalbetrieb axial nach unten verstellt, so dass ein maximaler Federspeicher-Bremsdruck p3b wirkt. Der bei einer redundanten Betriebsbrems-Bremsvorgabe VB (kein Umschaltsignal S1) im ersten Steuerraum 14a vorherrschende Vorderachs-Betriebsbrems-Steuerdruck pV zieht dann entgegen dieser axialen Bewegung den ersten Steuerkolben 15a und über die untere Anlagefläche 21b und die Schaftverengung 20 auch den zweiten Steuerkolben 15b zu einem gewissen Maße wieder nach oben, so dass sich der Federspeicher-Bremsdruck p3b wieder abbaut und ein teilweises Zuspannen der Federspeicherteile 3b erreicht wird. Die durch die vorherrschenden Steuerdrücke p5, pV auf die beiden Steuerkolben 15a, 15b wirkenden Kräfte überlagern sich somit, so dass durch die Federspeicherteile 3b eine entsprechende Bremswirkung erreicht wird.

Die Wirkung eines bestimmten Vorderachs-Betriebsbrems-Steuerdruckes pV auf die Federspeicherteile 3b im pneumatischen Redundanzfall kann durch das Bypass-Ventil 27 gezielt eingestellt werden. So kann beispielsweise eingestellt werden, dass der Bypass-Steuerkolben 27d bei unbetätigtem Parkbremsventil 5 vom Einlasssitz 27f bei Überschreiten eines im ersten Steuerraum 14a vorherrschenden Grenzdruckes pG abhebt. Dadurch wirkt der Vorderachs-Betriebsbrems-Steuerdruck pV bei Werten, die geringer sind als der Grenzdruck pG, lediglich im ersten Steuerraum 14a während der dritte Steuerraum 14c unter Atmosphärendruck steht. Auf den ersten Steuerkolben 15a wirkt demnach lediglich eine erste Druckkraft X1 in die erste Richtung R1, so dass der Vorderachs-Betriebsbrems-Steuerdruck pV unmittelbar in einen invertierten Federspeicher-Bremsdruck p3b umgesetzt wird.

Der Grenzdruck pG kann beispielsweise auf zwischen 0,5 bar und 0,7 bar eingestellt werden, wobei bei Einstellen dieses Grenzdruckes pG als Vorderachs-Betriebsbrems-Steuerdruck pV vom Steuerventil 12 ein Federspeicher-Bremsdruck p3b ausgesteuert wird, der einem Lösedruck pL der Federspeicherteile 3b der Hinterachs-Radbremsen 3 entspricht. Der Lösedruck pL gibt hierbei an, ab welchem Federspeicher-Bremsdruck p3b die Federspeicherteile 3b tatsächlich öffnen und somit eine Bremswirkung entfalten. Der Lösedruck pL resultiert hierbei aus der Federcharakteristik des jeweiligen Federspeicherteils 3b und einem davon abhängigen Leerweg. Diese können für unterschiedliche Federspeicherbremsen variieren, weshalb auch der Grenzdruck pG variieren kann.

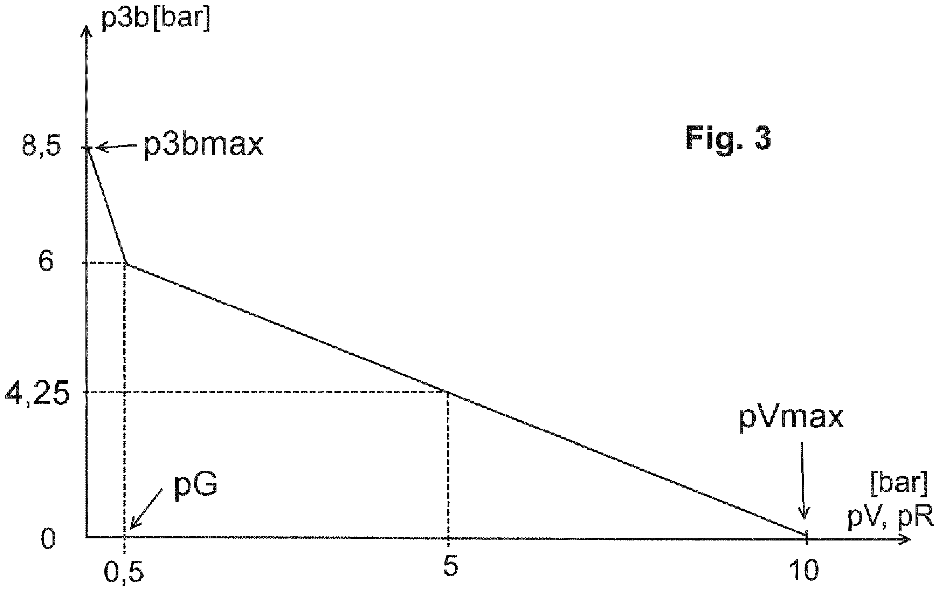

Da der Vorderachs-Betriebsbrems-Steuerdruck pV bis zu diesem Grenzdruck pG nur auf den ersten Steuerkolben 15a wirkt, erreicht der vom Steuerventil 12 ausgesteuerte Federspeicher-Bremsdruck p3b den Lösedruck pL bei einer redundanten Bremsbetätigung sehr schnell, was in Fig. 3 durch eine stark abfallende Flanke beispielhaft dargestellt ist. Somit kann der Betätigungsweg reduziert werden, innerhalb dessen der Fahrer bei einer redundanten Bremsung noch keine Bremswirkung spürt.

Ab dem Grenzdruck pG ist die Wirkung des Vorderachs-Betriebsbrems-Steuerdruckes pV zusammen mit der Federwirkung der Bypass-Feder 27e auf den Bypass-Steuerkolben 27d so stark, dass der Bypass-Steuerkolben 27d in die erste Richtung R1 abhebt und somit eine Verbindung zwischen dem ersten und dem dritten Steuerraum 14a, 14c geschaffen wird. Dadurch wird erreicht, dass auf den ersten Steuerkolben 15a nunmehr die erste Druckkraft X1 in die erste Richtung R1 (aus dem ersten Steuerraum 14a von unten in Fig. 2) und gleichzeitig auch eine zweite Druckkraft X2 in die zweite Richtung R2 (aus dem dritten Steuerraum 14c von oben in Fig. 2) wirken. Die Bewegung des ersten Steuerkolbens 15a ist also abhängig von dem Vorderachs-Betriebsbrems-Steuerdruck pV sowie dem Flächenverhältnis zwischen einer dem ersten Steuerraum 14a zugewandten ersten Oberfläche F1 der ersten Wandung 17a und einer dem dritten Steuerraum 14c zugewandten zweiten Oberfläche F2 der ersten Wandung 17a.

Bei einem Flächenverhältnis von F1:F2 = 1:1 würden sich die beiden Drucckräfte X1, X2 auf den ersten Steuerkolben 15a genau aufheben, so dass keine Bewegung des ersten Steuerkolbens 15a resultiert. Um dies zu vermeiden, ist im dritten Steuerraum 14c ein zusätzliches Kolbenelement 28 vorgesehen, das mit dem ersten Steuerkolben 15a bzw. der ersten Wandung 17a verbunden ist und das die zweite Oberfläche F2, auf die der Vorderachs-Betriebsbrems-Steuerdruck pV in die zweite Richtung R2 wirken kann, verkleinert. Dadurch wirkt im abgehobenen Zustand des Bypass-Steuerkolbens 27d immer eine höhere erste Druckkraft X1 auf die erste Oberfläche F1, so dass der erste Steuerkolben 15a bei steigendem Vorderachs-Betriebsbrems-Steuerdruck pV in die erste Richtung R1 verstellt wird, was einen erhöhten Federspeicher-Bremsdruck p3b zur Folge hat.

Wie aus Fig. 3 ersichtlich, ist die Steigung aufgrund der von unten und oben auf den ersten Steuerkolben 15a wirkenden Druckkräfte X1, X2 geringer als für Vorderachs-Betriebsbrems-Steuerdrücke pV, die geringer als der Grenzdruck pG sind. Durch das Volumen des Kolbenelementes 28 kann also für pV > pG die Übersetzung zwischen dem Vorderachs-Betriebsbrems-Steuerdruck pV und dem ausgesteuerten Federspeicher-Bremsdruck p3b im redundanten Bremsbetrieb gezielt eingestellt werden und somit eine Druckmodulation des Federspeicher-Bremsdruckes p3b erfolgen. Dabei kann ergänzend eingestellt werden, dass beispielsweise bei einem Vorderachs-Betriebsbrems-Steuerdruck pV, der der Hälfte eines maximalen Vorderachs-Betriebsbrems-Steuerdruck pVmax von z.B. 10bar entspricht, auch die Hälfte eines maximalen Federspeicher-Bremsdruckes p3bmax von z.B. 8,5bar ausgesteuert wird. Somit kann eine klar definierte Steuerventil-Charakteristik vorgegeben werden, um das Bremsgefühl im Redundanzfall zu verbessern.

Um ein Rückstellen des ersten Steuerkolbens 15a nach einem Abfall des Federspeicher-Bremsdruckes p3b bzw. eines Schließens des Bypass-Ventils 27 zu ermöglichen, sind der erste und der dritte Steuerraum 14a, 14c mit einem zum ersten Steuerraum 14a hin öffnenden Rückschlagventil 29 verbunden.

Über ein Anhänger-Steuerventil 25 (s. Fig. 1) kann in gewohnter Weise eine elektrische und/oder pneumatische Übertragung des Vorderachs-Betriebsbrems-Steuerdruckes pV sowie des Parkbrems-Steuerdruckes p5 bzw. eines elektrischen Anhänger-Steuersignals ST erfolgen, um auch den Anhänger 200 abbremsen zu können.

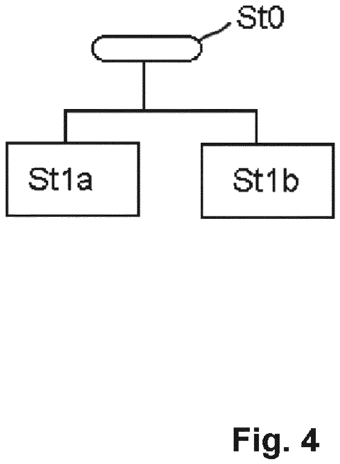

Somit kann erfindungsgemäß gemäß Fig. 4 erreicht werden, dass in einem Verfahren zunächst geprüft wird, ob das Zentralmodul 7 einen Defekt aufweist und/oder die Verbindung zum Hinterachs-Druckmodulator 11 einen Defekt aufweist und somit eine elektrische Ansteuerung der Hinterachs-Radbremsen 3 nicht möglich ist (St0). Ist dies nicht der Fall, wird dem Schaltventil 26 in einem ersten Alternativ-Schritt St1a über das Umschaltsignal S1 vorgegeben, dass ein Einleiten des Vorderachs-Betriebsbrems-Steuerdruckes pV oder des Redundanz-Betriebsbrems-Steuerdruckes pR in den ersten Steuerraum 14a verhindert wird. Der erste Steuerraum 14a und auch der dritte Steuerraum 14c sind damit mit der Atmosphäre A verbunden und beeinflussen das Umsetzen der Parkbrems-Bremsvorgabe VP nicht. Liegt jedoch ein Defekt in der elektrischen Ansteuerung des Hinterachs-Druckmodulators 11 vor, bleibt das Umschaltsignal S1 aus und in einem zweiten Alternativ-Schritt St1b wird der Vorderachs-Betriebsbrems-Steuerdruck pV oder der Redundanz-Betriebsbrems-Steuerdruck pR in den ersten Steuerraum 14a eingelassen. Liegt keine Parkbrems-Bremsvorgabe VP vor, so wird eine dem Vorderachs-Betriebsbrems-Steuerdruck pV bzw. dem Redundanz-Betriebsbrems-Steuerdruck pR entsprechende Bremswirkung bei Vorliegen einer Betriebsbrems-Bremsvorgabe VB wie beschrieben über die Federspeicherteile 3b umgesetzt, wobei der Federspeicher-Bremsdruck p3b in Abhängigkeit einer Schaltstellung B1, B2 eines Bypass-Ventils 27 im Steuerventil 12 vorgegeben wird, wobei je nach Schaltstellung B1, B2 des Bypass-Ventils 27 unterschiedliche Druckkräfte X1, X2 auf den ersten Steuerkolben 15a wirken. Bei Vorliegen einer Parkbrems-Bremsvorgabe VP und gleichzeitigem redundanten pneumatischen Ansteuern des Steuerventils 12 mit dem Vorderachs-Betriebsbrems-Steuerdruck pV bzw. dem Redundanz-Betriebsbrems-Steuerdruck pR, d.h. ohne Vorliegen eines Umschaltsignals S1, wird das redundante Umsetzen der Betriebsbrems-Bremsvorgabe VB an den Hinterrädern 3b wie beschrieben automatisch verhindert.

### Bezugszeichenliste (Teil der Beschreibung)

- 1: Bremssystem
- 2: Vorderachs-Radbremsen
- 2a: Vorderräder
- 3: Hinterachs-Radbremsen
- 3a: Hinterräder
- 3b: Federspeicherteil der Hinterachs-Radbremsen 3
- 3c: Membranteil der Hinterachs-Radbremsen 3
- 4: Betriebsbremsventil
- 5: Parkbremsventil
- 6: Vorderachs-Druckmodulator
- 6a: Redundanz-Anschluss
- 7: Zentralmodul
- 8a: erster Druckmittelvorrat
- 8b: zweiter Druckmittelvorrat
- 8c: dritter Druckmittelvorrat
- 9: ABS-Steuerventile
- 10: Raddrehzahlsensoren
- 11: Hinterachs-Druckmodulator
- 12: Steuerventil
- 12a: erster Steuereingang des Steuerventils 12
- 12b: zweiter Steuereingang des Steuerventils 12
- 12c: Arbeitsausgang
- 12d: Versorgungsanschluss
- 12e: Entlüftungsanschluss
- 12f: Ventilgehäuse
- 13: Abzweigung
- 14a: erster Steuerraum
- 14b: zweiter Steuerraum
- 14c: dritter Steuerraum
- 15a: erster Steuerkolben
- 15b: zweiter Steuerkolben
- 16: Druckraum
- 17a: erste Wandung
- 17b: zweite Wandung
- 17c: dritte Wandung
- 18: Öffnung
- 19a: erster Schaft des ersten Steuerkolbens 15a
- 19b: zweiter Schaft des zweiten Steuerkolbens 15b
- 20: Schaftverengung
- 21a: obere Anlagefläche des ersten Schafts 19a
- 21b: untere Anlagefläche des ersten Schafts 19a
- 22: Ventilkörper
- 23: Druckfeder
- 24: Durchlass
- 25: Anhänger-Steuerventil
- 26: Schaltventil
- 26a: Erster Schaltventil-Eingang
- 26b: zweiter Schaltventil-Eingang
- 26c: Schaltventil-Ausgang
- 27: Bypass-Ventil
- 27a: Bypass-Druckraum 27a
- 27b: erster Verbindungskanal
- 27c: zweiter Verbindungskanal
- 27d: Bypass-Steuerkolben
- 27e: Bypass-Feder
- 27f: Einlasssitz
- 27i: Bypass-Steuereingang
- 27g: Bypass-Steuerraum
- 27k: Bypass-Auslass
- 28: Kolbenelement
- 29: Rückschlagventil
- 100: Zugfahrzeug
- 200: Anhänger
- A: Atmosphäre
- B1: erste Schaltstellung des Bypass-Ventils 27
- B2: zweite Schaltstellung des Bypass-Ventils 27
- F1: erste Oberfläche der ersten Wandung 17a
- F2: zweite Oberfläche der ersten Wandung 17a
- K1: erster Kanal des Betriebsbremsventils 4
- K2: zweiter Kanal des Betriebsbremsventils 4
- p2: Vorderachs-Bremsdruck
- p3b: Federspeicher-Bremsdruck
- p3bmax: maximaler Federspeicher-Bremsdruck
- p3c: Membran-Bremsdruck
- p5: Parkbrems-Steuerdruck
- p27: Bypass-Steuerdruck
- pL: Lösedruck
- pG: Grenzdruck
- pR: Redundanz-Betriebsbrems-Steuerdruck
- pV: Vorderachs-Betriebsbrems-Steuerdruck
- pVmax: maximaler Vorderachs-Betriebsbrems-Steuerdruck
- R1: erste Richtung
- R2: zweite Richtung
- S1: Umschaltsignal
- S2: Vorderachs-Steuersignal
- S3: Hinterachs-Steuersignal
- S4: Betriebsbrems-Betätigungssignal
- ST: Anhänger-Steuersignal
- VB: Betriebsbrems-Bremsvorgabe
- VP: Parkbrems-Bremsvorgabe
- X1: erste Druckkraft auf den ersten Steuerkolben 15a
- X2: zweite Druckkraft auf den ersten Steuerkolben 15a
- St0, St1a, St1b: Schritte des Verfahrens

## Patentansprüche

1. Steuerventil (12) zum Aussteuern eines Federspeicher-Bremsdruckes (p3b) an Federspeicherteile (3b) einer Hinterachs-Radbremse (3), wobei das Steuerventil (12) pneumatisch über einen zweiten Steuereingang (12b) mit einem Parkbrems-Steuerdruck (p5) ansteuerbar ist, wobei der Parkbrems-Steuerdruck (p5) derartig auf in einem Ventilgehäuse (12f) des Steuerventils (12) angeordnete Steuermittel (14b, 15b, 17c, 22, 23, 24) einwirken kann, dass sich an einem Arbeitsausgang (12c) des Steuerventils (12) ein Federspeicher-Bremsdruck (p3b) in Abhängigkeit des Parkbrems-Steuerdruckes (p5) einstellt zum Umsetzen einer Parkbrems-Bremsvorgabe (VP) mit den Federspeicherteilen (3b) der Hinterachs-Radbremsen (3),
**dadurch gekennzeichnet, dass**
das Steuerventil (12) weiterhin einen ersten Steuereingang (12a) zum Ansteuern des Steuerventils (12) mit einem von einer Betriebsbrems-Bremsvorgabe (VB) abhängigen Betriebsbrems-Steuerdruck (pV; pR) aufweist, wobei der erste Steuereingang (12a) dazu mit einem verstellbaren ersten Steuerraum (14a) verbindbar ist, wobei der erste Steuerraum (14a) über einen ersten Steuerkolben (15a) derartig mit den im Steuerventil (12) angeordneten Steuermitteln (14b, 15b, 17c, 22, 23, 24) in Wirkverbindung steht, dass der Federspeicher-Bremsdruck (p3b) am Arbeitsausgang (12c) bei einer Verstellung des ersten Steuerraumes (14a) infolge einer Druckbeaufschlagung mit dem Betriebsbrems-Steuerdruck (pV; pR) in Abhängigkeit des Betriebsbrems-Steuerdruckes (pV; pR) und/oder des Parkbrems-Steuerdruckes (p5) einstellbar ist, wobei der erste Steuerkolben (15a) weiterhin mit einem dritten Steuerraum (14c) in Wirkverbindung steht, wobei auf den ersten Steuerkolben (15a)
- bei einer Druckbeaufschlagung des ersten Steuerraumes (14a) mit dem Betriebsbrems-Steuerdruck (pV; pR) eine erste Druckkraft (X1) in eine erste Richtung (R1) wirkt, und
- bei einer Druckbeaufschlagung des dritten Steuerraumes (14c) mit demselben Betriebsbrems-Steuerdruck (pV; pR) eine zweite Druckkraft (X2) in eine der ersten Richtung (R1) entgegengesetzte zweite Richtung (R2) wirkt,
wobei der erste Steuerraum (14a) über ein schaltbares Bypass-Ventil (27) mit dem dritten Steuerraum (14c) verbindbar ist zum Beaufschlagen beider Steuerräume (14a, 14c) mit demselben Betriebsbrems-Steuerdruck (pV; pR).

2. Steuerventil (12) nach Anspruch 1, **dadurch gekennzeichnet, dass** der erste Steuerraum (14a) durch eine mit dem ersten Steuerkolben (15a) verbundene erste Wandung (17a) von dem dritten Steuerraum (14c) getrennt ist und der Betriebsbrems-Steuerdruck (pV; pR) im ersten Steuerraum (14a) auf eine erste Oberfläche (F1) der ersten Wandung (17a) wirkt und der Betriebsbrems-Steuerdruck (pV; pR) je nach Schaltstellung (B1, B2) des Bypass-Ventils (27) im dritten Steuerraum (14c) auf eine zweite Oberfläche (F2) der ersten Wandung (17a) wirkt.

3. Steuerventil (12) nach Anspruch 2, **dadurch gekennzeichnet, dass** die erste Oberfläche (F1) größer ist als die zweite Oberfläche (F2), so dass bei einer Druckbeaufschlagung des ersten Steuerraumes (14a) mit dem Betriebsbrems-Steuerdruck (pV; pR) eine erste Druckkraft (X1) auf den ersten Steuerkolben (15a) in die erste Richtung (R1) wirkt, die größer ist als eine zweite Druckkraft (X2) auf den ersten Steuerkolben (15a) in die zweite Richtung (R2) bei einer gleichzeitigen Druckbeaufschlagung des dritten Steuerraumes (14c) mit demselben Betriebsbrems-Steuerdruck (pV; pR).

4. Steuerventil (12) nach Anspruch 3, **dadurch gekennzeichnet, dass** auf der zweiten Oberfläche (F2) der ersten Wandung (17a) ein Kolbenelement (28) angeordnet ist, wobei das Kolbenelement (28) derartig durch den dritten Steuerraum (14c) hindurch ragt, dass die zweite Oberfläche (F2) auf der ersten Wandung (17a) reduziert ist, wobei die zweite Drucckraft (X2) auf den ersten Steuerkolben (15a) bei einer Druckbeaufschlagung des dritten Steuerraumes (14c) mit dem Betriebsbrems-Steuerdruck (pV; pR) lediglich durch das Einwirken des Betriebsbrems-Steuerdruckes (pV; pR) auf die um das Kolbenelement (28) reduzierte zweite Oberfläche (F2) bewirkt wird.

5. Steuerventil (12) nach einem der vorhergehenden Ansprüche, **dadurch gekennzeichnet, dass** das Bypass-Ventil (27) in Abhängigkeit eines festgelegten Grenzdruckes (pG) im ersten Steuerraum (14a) umschaltbar ist, wobei der erste Steuerraum (14a) mit dem dritten Steuerraum (14c) über das Bypass-Ventil (27) verbunden ist, wenn bei einer Druckbeaufschlagung des ersten Steuerraumes (14a) mit dem Betriebsbrems-Steuerdruck (pV; pR) der Betriebsbrems-Steuerdruck (pV; pR) den festgelegten Grenzdruck (pG) überschreitet, und der erste Steuerraum (14a) über das Bypass-Ventil (27) nicht mit dem dritten Steuerraum (14c) verbunden ist, wenn der Betriebsbrems-Steuerdruck (pV; pR) den festgelegten Grenzdruck (pG) unterschreitet, wobei der Grenzdruck (pG) vorzugsweise zwischen 0,5bar und 0,7bar liegt.

6. Steuerventil (12) nach einem der vorhergehenden Ansprüche, **dadurch gekennzeichnet, dass** das Bypass-Ventil (27) druckgesteuert umschaltbar ist.

7. Steuerventil (12) nach Anspruch 6, **dadurch gekennzeichnet, dass** das Bypass-Ventil (27) einen Bypass-Steuerkolben (27d) aufweist, wobei der Bypass-Steuerkolben (27d) in Abhängigkeit eines in einem Bypass-Steuerraum (27g) wirkenden Bypass-Steuerdruckes (p27) sowie in Abhängigkeit eines in einem Bypass-Druckraum (27a) wirkenden Umschaltdruckes (pU) verstellt werden kann zum Umschalten des Bypass-Ventils (27), wobei der Umschaltdruck (pU) dem Druck im ersten Steuerraum (14a) entspricht und der Bypass-Steuerkolben (27d) mit unterschiedlichen Bereichen in dem Bypass-Steuerraum (27g) und dem Bypass-Druckraum (27a) derartig liegt, dass der Bypass-Steuerdruck (p27) in entgegengesetzter Richtung zum Umschaltdruck (pU) auf den Bypass-Steuerkolben (27d) einwirkt.

8. Steuerventil (12) nach einem der Ansprüche 5 bis 7, **dadurch gekennzeichnet, dass** der Bypass-Steuerkolben (27d) von einem Einlasssitz (27f) abhebt sobald der Umschaltdruck (pU) den Grenzdruck (pG) überschreitet und der erste Steuerraum (14a) dadurch mit dem dritten Steuerraum (14c) verbunden ist.

9. Steuerventil (12) nach Anspruch 7 oder 8, **dadurch gekennzeichnet, dass** der Bypass-Steuerraum (27g) über einen Bypass-Steuereingang (27i) mit dem Arbeitsausgang (12c) des Steuerventils (12) verbunden ist zum Zuführen des Federspeicher-Bremsdruckes (p3b) als Bypass-Steuerdruck (p27).

10. Steuerventil (12) nach einem der vorhergehenden Ansprüche, **dadurch gekennzeichnet, dass** die Steuermittel durch einen verstellbaren zweiten Steuerraum (14b) sowie einen verstellbaren zweiten Steuerkolben (15b) ausgebildet sind, wobei der Parkbrems-Steuerdruck (p5) über den zweiten Steuereingang (12b) in den zweiten Steuerraum (14b) eingelassen werden kann und der zweite Steuerkolben (15b) durch ein Einwirken des Parkbrems-Steuerdruckes (p5) auf den zweiten Steuerkolben (15b) in eine erste Richtung (R1) und/oder eine der ersten Richtung (R1) entgegengerichtete zweite Richtung (R2) verstellbar ist,
insbesondere wobei der zweite Steuerraum (14b) durch eine am verstellbaren zweiten Steuerkolben (15b) angeordnete dritte Wandung (17c) begrenzt ist, wobei die dritte Wandung (17c) gegenüber dem Ventilgehäuse (12f) derartig beweglich ist, dass der zweite Steuerkolben (15b) durch ein Einwirken des Parkbrems-Steuerdruckes (p5) auf die dritte Wandung (17c) verstellt werden kann.

11. Steuerventil (12) nach Anspruch 10, **dadurch gekennzeichnet, dass** der erste Steuerkolben (15a) mit dem zweiten Steuerkolben (15b) derartig in Wirkverbindung steht, dass der zweite Steuerkolben (15b) durch eine Verstellung des ersten Steuerkolbens (15a) zumindest bereichsweise mitgenommen wird.

12. Steuerventil (12) nach Anspruch 11, **dadurch gekennzeichnet, dass** der erste Steuerraum (14a) von einer gegenüber einem Ventilgehäuse (12f) beweglichen ersten Wandung (17a) sowie einer mit dem Ventilgehäuse (12f) fest verbundenen zweiten Wandung (17b) begrenzt ist, wobei der erste Steuerkolben (15a) derartig mit der ersten Wandung (17a) verbunden ist, dass der erste Steuerkolben (15a) und der damit in Wirkverbindung stehende zweite Steuerkolben (15b) durch ein Druckerhöhen im ersten Steuerraum (14a) in eine erste Richtung (R1) gedrängt werden, insbesondere wobei der zweite Steuerraum (14b) relativ zum ersten Steuerraum (14a) derartig angeordnet ist, dass der zweite Steuerkolben (15b) und der damit in Wirkverbindung stehende erste Steuerkolben (15a) bei einem Druckerhöhen im zweiten Steuerraum (14b) in die zweite Richtung (R2) gedrängt werden, wenn der erste Steuerraum (14a) und/oder der dritte Steuerraum (14c) mit der Atmosphäre (A) verbunden sind.

13. Steuerventil (12) nach Anspruch 12, **dadurch gekennzeichnet, dass** der zweite Steuerraum (14b) ebenfalls von der mit dem Ventilgehäuse (12f) fest verbundenen zweiten Wandung (17b) begrenzt ist, wobei der zweite Steuerkolben (15b) bei einer Druckerhöhung im zweiten Steuerraum (14b) von der zweiten Wandung (17b) weg in die zweite Richtung (R2) und der erste Steuerkolben (15a) bei einer Druckerhöhung im ersten Steuerraum (14a) von der zweiten Wandung (17b) weg in die erste Richtung (R1) gedrückt werden.

14. Steuerventil (12) nach einem der Ansprüche 10 bis 13, **dadurch gekennzeichnet, dass** der erste Steuerraum (14a) und der zweite Steuerraum (14b) über die Steuerkolben (15a, 15b) derartig miteinander zusammenwirken, dass sich am Arbeitsausgang (12c) ein Federspeicher-Bremsdruck (p3b) einstellt, der abhängig von dem im zweiten Steuerraum (14b) vorherrschenden Parkbrems-Steuerdruck (p5) und/oder dem im ersten Steuerraum (14a) vorherrschenden Betriebsbrems-Steuerdruck (pV; pR) ist, insbesondere je nachdem, welche den Steuerdrücken (p5, pV; pR) zugeordnete Bremsvorgabe (VB, VP) die höhere ist.

15. Steuerventil (12) nach einem der Ansprüche 10 bis 14, **dadurch gekennzeichnet, dass** als Steuermittel weiterhin ein durch eine Druckfeder (23) vorgespannter, axial beweglicher Ventilkörper (22) vorgesehen ist, wobei der Arbeitsausgang (12c) je nach axialer Verstellung des Ventilkörpers (22) entweder über einen Druckraum (16) mit einem Entlüftungsanschluss (12e) zum Reduzieren des Federspeicher-Bremsdruckes (p3b) oder mit einem Versorgungsanschluss (12d) zum Erhöhen des Federspeicher-Bremsdruckes (p3b) verbindbar ist, wobei der zweite Steuerkolben (15b) den Ventilkörper (22) in Abhängigkeit des Parkbrems-Steuerdruckes (p5) und/oder des Betriebsbrems-Steuerdruckes (pV; pR) axial verstellen kann.

16. Steuerventil (12) nach einem der vorhergehenden Ansprüche, **dadurch gekennzeichnet, dass** das Steuerventil (12) mit einem schaltbaren Umschaltventil (26) derartig zusammenwirkt, dass der erste Steuerraum (14a) mit einem Betriebsbremsventil (4) verbunden werden kann zum Vorgeben eines Betriebsbrems-Steuerdruckes (pV; pR) in dem ersten Steuerraum (14a) oder mit einer Atmosphäre (A) verbunden werden kann zum Entlüften des ersten Steuerraumes (14a), wobei das Umschaltventil (26) im Steuerventil (12) integriert ist oder dem ersten Steuereingang (12a) des Steuerventils (12) vorgeschaltet ist.

17. Elektronisch steuerbares Bremssystem (1) mit Vorderachs-Radbremsen (2), Hinterachs-Radbremsen (3) mit einem Federspeicherteil (3b) und einem Membranteil (3c), einem elektropneumatisch steuerbaren Vorderachs-Druckmodulator (6) zur Ausgabe eines Vorderachs-Bremsdruckes (p2) an die Vorderachs-Radbremsen (2), einem elektronisch steuerbaren Hinterachs-Druckmodulator (11) zur Ausgabe eines Membran-Bremsdruckes (p3c) an die Membranteile (3c) der Hinterachs-Radbremsen (3), einem Zentralmodul (7), einem elektropneumatischen Betriebsbremsventil (4),
wobei das Betriebsbremsventil (4) ausgebildet ist, in Abhängigkeit einer Betriebsbrems-Bremsvorgabe (VB) ein elektrisches Betriebsbrems-Betätigungssignal (S4) an das Zentralmodul (7) auszugeben,
wobei das Zentralmodul (7) signalleitend mit dem Vorderachs-Druckmodulator (6) und dem Hinterachs-Druckmodulator (11) verbunden ist zum Übertragen von dem Betriebsbrems-Betätigungssignal (S4) abhängigen Steuersignalen (S2, S3) an die Druckmodulatoren (6, 11), wobei das Betriebsbremsventil (4) weiterhin ausgebildet ist, in Abhängigkeit der Betriebsbrems-Bremsvorgabe (VB) einen pneumatischen Betriebsbrems-Steuerdruck (pV; pR) auszugeben, wobei der Vorderachs-Druckmodulator (6) im Redundanzfall über einen Redundanz-Anschluss (6a) mit einem Vorderachs-Betriebsbrems-Steuerdruck (pV) ansteuerbar ist,
wobei das Bremssystem (1) weiterhin ein Parkbremsventil (5) aufweist und das Parkbremsventil (5) in Abhängigkeit einer Parkbrems-Bremsvorgabe (VP) einen Parkbrems-Steuerdruck (p5) an einen zweiten Steuereingang (12b) eines Steuerventils (12) ausgibt, wobei das Steuerventil (12) in Abhängigkeit des Parkbrems-Steuerdruckes (p5) einen Federspeicher-Bremsdruck (p3b) an einem Arbeitsausgang (12c) des Steuerventils (12) einstellen kann und der Arbeitsausgang (12c) des Steuerventils (12) mit Federspeicherteilen (3b) der Hinterachs-Radbremsen (3) verbunden ist zum Einstellen des Federspeicher-Bremsdruckes (p3b) auch an den Federspeicherteilen (3b) der Hinterachs-Radbremsen (3),
**dadurch gekennzeichnet, dass**
das Steuerventil (12) zur Einstellung des Federspeicher-Bremsdruckes (p3b) ein Steuerventil (12) nach einem der vorhergehenden Ansprüche ist, wobei das Betriebsbremsventil (4) pneumatisch mit einem ersten Steuereingang (12a) des Steuerventils (12) verbindbar ist zum Übertragen des Betriebsbrems-Steuerdruckes (pV; pR) an das Steuerventil (12) und zum Einstellen eines Federspeicher-Bremsdruckes (p3b) an den Federspeicherteilen (3b) der Hinterachs-Radbremsen (3) in Abhängigkeit des Parkbrems-Steuerdruckes (p5) und/oder des Betriebsbrems-Steuerdruckes (pV; pR).

18. Elektronisch steuerbares Bremssystem (1) nach Anspruch 17, **dadurch gekennzeichnet, dass** das Zentralmodul (7) signalleitend mit einem im Steuerventil (12) integrierten oder dem ersten Steuereingang (12a) vorgeschalteten Umschaltventil (26) verbunden ist zum wahlweisen Verbinden des Betriebsbremsventils (4) mit dem ersten Steuerraum (14a) des Steuerventils (12) oder der Atmosphäre (A) mit dem ersten Steuerraum (14a) des Steuerventils (12), wobei im Normalbetrieb ohne Vorliegen eines Defektes oder eines Ausfalls bei der elektrischen Ansteuerung des Hinterachs-Druckmodulators (11) über ein an das Umschaltventil (26) übermitteltes Umschaltsignal (S1) vorgebbar ist, dass die Atmosphäre (A) mit dem ersten Steuerraum (14a) verbunden ist und sonst das Betriebsbremsventil (4) mit dem ersten Steuerraum (14a) verbunden ist.

19. Elektronisch steuerbares Bremssystem (1) nach Anspruch 17 oder 18, **dadurch gekennzeichnet, dass** das Betriebsbremsventil (4) einkanalig ausgeführt ist und der dem Vorderachs-Druckmodulator (6) vom Betriebsbremsventil (4) zugeführte Vorderachs-Steuerdruck (pV) über eine Abzweigung (13) auch dem ersten Steuereingang (12a) des Steuerventils (12) zuführbar ist oder das Betriebsbremsventil (4) zweikanalig ausgeführt ist, wobei ein erster Kanal (K1) mit dem Redundanz-Anschluss (6a) des Vorderachs-Druckmodulators (6) verbunden ist zur pneumatischen Ansteuerung des Vorderachs-Druckmodulators (6) mit dem Vorderachs-Betriebsbrems-Steuerdruck (pV) und ein zweiter Kanal (K2) mit dem ersten Steuereingang (12a) des Steuerventils (12) verbunden ist zur Übertragung eines im Betriebsbremsventil (4) erzeugten Redundanz-Steuerdruckes (pR) an das Steuerventil (12).

20. Verfahren zum Steuern eines elektrisch steuerbaren Bremssystems (1) nach einem der Ansprüche 17 bis 19, wobei das Betriebsbremsventil (4) bei Feststellen eines elektrischen Defektes oder eines Ausfalls bei der elektrischen Ansteuerung der Hinterachs-Radbremsen (3) durch den Membranteil (3c) (St0) mit dem ersten Steuerraum (14a) verbunden wird, so dass ein vom Betriebsbrems-Steuerdruck (pV; pR) abhängiger Federspeicher-Bremsdruck (p3b) an den Federspeicherteilen (3b) der Hinterachs-Radbremsen (3) eingestellt werden kann (St1a), wobei der Federspeicher-Bremsdruck (p3b) in Abhängigkeit einer Schaltstellung (B1, B2) eines Bypass-Ventils (27) im Steuerventil (12) vorgegeben wird, wobei je nach Schaltstellung (B1, B2) des Bypass-Ventils (27) unterschiedliche Druckkräfte (X1, X2) auf den ersten Steuerkolben (15a) wirken.

21. Verfahren nach Anspruch 20, **dadurch gekennzeichnet, dass** das Bypass-Ventil (27) im Steuerventil (12) in Abhängigkeit eines festgelegten Grenzdruckes (pG) im ersten Steuerraum (14a) umgeschaltet wird, wobei der erste Steuerraum (14a) mit dem dritten Steuerraum (14c) über das Bypass-Ventil (27) verbunden wird, wenn bei einer Druckbeaufschlagung des ersten Steuerraumes (14a) mit dem Betriebsbrems-Steuerdruck (pV; pR) der Betriebsbrems-Steuerdruck (pV; pR) den festgelegten Grenzdruck (pG) überschreitet, und der erste Steuerraum (14a) über das Bypass-Ventil (27) nicht mit dem dritten Steuerraum (14c) verbunden wird, wenn der Betriebsbrems-Steuerdruck (pV; pR) den festgelegten Grenzdruck (pG) unterschreitet.

22. Verfahren nach Anspruch 20 oder 21, **dadurch gekennzeichnet, dass** das Zentralmodul (7) dem Umschaltventil (27) im Normalbetrieb ohne Feststellen eines elektrischen Defektes oder eines Ausfalls bei der elektrischen Ansteuerung der Hinterachs-Radbremsen (3) durch den Membranteil (3c) (St0) über das Umschaltsignal (S1) vorgibt, dass der erste Steuerraum (14a) mit der Atmosphäre (A) verbunden wird (St1a).

## Claims

1. Control valve (12) for applying a spring-loaded brake pressure (p3b) to spring-loaded parts (3b) of a rear-axle wheel brake (3), wherein the control valve (12) is activatable pneumatically via a second control input (12b) with a parking-brake control pressure (p5), wherein the parking-brake control pressure (p5) can act in such a manner on control means (14b, 15b, 17c, 22, 23, 24) arranged in a valve housing (12f) of the control valve (12) that a spring-loaded brake pressure (p3b) arises at a working output (12c) of the control valve (12) as a function of the parking-brake control pressure (p5) for implementing a parking-brake braking specification (VP) with the spring-loaded parts (3b) of the rear-axle wheel brakes (3),
**characterized in that**
the control valve (12) furthermore has a first control input (12a) for activating the control valve (12) with a service-brake control pressure (pV; pR) which is dependent on a service-brake braking specification (VB), wherein, for this purpose, the first control input (12a) is connectable to an adjustable first control chamber (14a), wherein the first control chamber (14a) is operatively connected via a first control piston (15a) in such a manner to the control means (14b, 15b, 17c, 22, 23, 24) arranged in the control valve (12) that, during an adjustment of the first control chamber (14a) as a result of pressurization with the service-brake control pressure (pV; pR), the spring-loaded brake pressure (p3b) at the working output (12c) can be set as a function of the service-brake control pressure (pV; pR) and/or of the parking-brake control pressure (p5), wherein the first control piston (15a) is furthermore operatively connected to a third control chamber (14c), wherein, on the first control piston (15a),
- when the first control chamber (14a) is pressurized with the service-brake control pressure (pV; pR), a first compressive force (X1) acts in a first direction (R1), and
- when the third control chamber (14c) is pressurized with the same service-brake control pressure (pV; pR), a second compressive force (X2) acts in a second direction (R2) opposed to the first direction (R1), wherein the first control chamber (14a) is connectable to the third control chamber (14c) via a switchable bypass valve (27) for charging the two control chambers (14a, 14c) with the same service-brake control pressure (pV; pR).

2. Control valve (12) according to Claim 1, **characterized in that** the first control chamber (14a) is separated from the third control chamber (14c) by a first wall (17a) connected to the first control piston (15a) and the service-brake control pressure (pV; pR) acts in the first control chamber (14a) on a first surface (F1) of the first wall (17a) and, depending on the switching position (B1, B2) of the bypass valve (27), the service-brake control pressure (pV; pR) acts in the third control chamber (14c) on a second surface (F2) of the first wall (17a).

3. Control valve (12) according to Claim 2, **characterized in that** the first surface (F1) is larger than the second surface (F2), and therefore, when the first control chamber (14a) is pressurized with the service-brake control pressure (pV; pR), a first compressive force (X1) acts on the first control piston (15a) in the first direction (R1), said compressive force being larger than a second compressive force (X2) on the first control piston (15a) in the second direction (R2) during simultaneous pressurization of the third control chamber (14c) with the same service-brake control pressure (pV; pR).

4. Control valve (12) according to Claim 3, **characterized in that** a piston element (28) is arranged on the second surface (F2) of the first wall (17a), wherein the piston element (28) projects through the third control chamber (14c) in such a manner that the second surface (F2) on the first wall (17a) is reduced, wherein the second compressive force (X2) on the first control piston (15a) during pressurization of the third control chamber (14c) with the service-brake control pressure (pV; pR) is brought about only by the action of the service-brake control pressure (pV; pR) on the second surface (F2) which is reduced by the piston element (28).

5. Control valve (12) according to one of the preceding claims, **characterized in that** the bypass valve (27) can be switched over as a function of a defined limit pressure (pG) in the first control chamber (14a), wherein the first control chamber (14a) is connected to the third control chamber (14c) via the bypass valve (27) if, during pressurization of the first control chamber (14a) with the service-brake control pressure (pV; pR), the service-brake control pressure (pV; pR) exceeds the defined limit pressure (pG), and the first control chamber (14a) is not connected to the third control chamber (14c) via the bypass valve (27) if the service-brake control pressure (pV; pR) falls below the defined limit pressure (pG), wherein the limit pressure (pG) is preferably between 0.5 bar and 0.7 bar.

6. Control valve (12) according to one of the preceding claims, **characterized in that** the bypass valve (27) can be switched over in a pressure-controlled manner.

7. Control valve (12) according to Claim 6, **characterized in that** the bypass valve (27) has a bypass control piston (27d), wherein the bypass control piston (27d) can be adjusted depending on a bypass control pressure (p27) acting in a bypass control chamber (27g) and depending on a switching-over pressure (pU) acting in a bypass pressure chamber (27a), for the switching over of the bypass valve (27), wherein the switching-over pressure (pU) corresponds to the pressure in the first control chamber (14a), and the bypass control piston (27d) lies with different regions in the bypass control chamber (27g) and the bypass pressure chamber (27a) in such a manner that the bypass control pressure (p27) acts on the bypass control piston (27d) in the opposite direction to the switching-over pressure (pU).

8. Control valve (12) according to one of Claims 5 to 7, **characterized in that** the bypass control piston (27d) lifts off from an inlet seat (27f) as soon as the switching-over pressure (pU) exceeds the limit pressure (pG) and the first control chamber (14a) is thereby connected to the third control chamber (14c).

9. Control valve (12) according to Claim 7 or 8, **characterized in that** the bypass control chamber (27g) is connected via a bypass control input (27i) to the working output (12c) of the control valve (12), for supplying the spring-loaded brake pressure (p3b) as bypass control pressure (p27).

10. Control valve (12) according to one of the preceding claims, **characterized in that** the control means are formed by an adjustable second control chamber (14b) and an adjustable second control piston (15b), wherein the parking-brake control pressure (p5) can be admitted into the second control chamber (14b) via the second control input (12b) and the second control piston (15b) is adjustable in a first direction (R1) and/or a second direction (R2) opposed to the first direction (R1) by action of the parking-brake control pressure (p5) on the second control piston (15b), in particular wherein the second control chamber (14b) is bounded by a third wall (17c) arranged on the adjustable second control piston (15b), wherein the third wall (17c) is movable in relation to the valve housing (12f) in such a manner that the second control piston (15b) can be adjusted by action of the parking-brake control pressure (p5) on the third wall (17c).

11. Control valve (12) according to Claim 10, **characterized in that** the first control piston (15a) is operatively connected to the second control piston (15b) in such a manner that the second control piston (15b) is carried along at least in regions by an adjustment of the first control piston (15a).

12. Control valve (12) according to Claim 11, **characterized in that** the first control chamber (14a) is bounded by a first wall (17a) which is movable in relation to a valve housing (12f) and by a second wall (17b) which is fixedly connected to the valve housing (12f), wherein the first control piston (15a) is connected to the first wall (17a) in such a manner that the first control piston (15a) and the second control piston (15b) which is operatively connected thereto are forced by an increase in pressure in the first control chamber (14a) in a first direction (R1), in particular wherein the second control chamber (14b) is arranged relative to the first control chamber (14a) in such a manner that the second control piston (15b) and the first control piston (15a) which is operatively connected thereto are forced, when there is an increase in pressure in the second control chamber (14b), in the second direction (R2) when the first control chamber (14a) and/or the third control chamber (14c) are connected to the atmosphere (A).

13. Control valve (12) according to Claim 12, **characterized in that** the second control chamber (14b) is likewise bounded by the second wall (17b) which is fixedly connected to the valve housing (12f), wherein, when there is an increase in pressure in the second control chamber (14b), the second control piston (15b) is pushed away from the second wall (17b) in the second direction (R2), and, when there is an increase in pressure in the first control chamber (14a), the first control piston (15a) is pushed away from the second wall (17b) in the first direction (R1).

14. Control valve (12) according to one of Claims 10 to 13, **characterized in that** the first control chamber (14a) and the second control chamber (14b) interact with each other via the control pistons (15a, 15b) in such a manner that a spring-loaded brake pressure (p3b) arises at the working output (12c), said spring-loaded brake pressure being dependent on the parking-brake control pressure (p5) prevailing in the second control chamber (14b) and/or on the service-brake control pressure (pV; pR) prevailing in the first control chamber (14a), in particular depending on which braking specification (VB, VP) associated with the control pressures (p5, pV; pR) is the higher.

15. Control valve (12) according to one of Claims 10 to 14, **characterized in that** an axially movable valve body (22) which is pretensioned by a compression spring (23) is furthermore provided as the control means, wherein, depending on the axial adjustment of the valve body (22), the working output (12c) is connectable either via a pressure chamber (16) to a venting connection (12e) for reducing the spring-loaded brake pressure (p3b) or to a supply connection (12d) for increasing the spring-loaded brake pressure (p3b), wherein the second control piston (15b) can adjust the valve body (22) axially as a function of the parking-brake control pressure (p5) and/or the service-brake control pressure (pV; pR).

16. Control valve (12) according to one of the preceding claims, **characterized in that** the control valve (12) interacts with a switchable switch-over valve (26) in such a manner that the first control chamber (14a) can be connected to a service-brake valve (4) for predetermining a service-brake control pressure (pV; pR) in the first control chamber (14a), or can be connected to an atmosphere (A) for venting the first control chamber (14a), wherein the switch-over valve (26) is integrated in the control valve (12) or is connected upstream of the first control input (12a) of the control valve (12).

17. Electronically controllable brake system (1) with front-axle wheel brakes (2), rear-axle wheel brakes (3) with a spring-loaded part (3b) and a membrane part (3c), an electro-pneumatically controllable front-axle pressure modulator (6) for outputting a front-axle brake pressure (p2) to the front-axle wheel brakes (2), an electronically controllable rear-axle pressure-modulator (11) for outputting a membrane-brake pressure (p3c) to the membrane parts (3c) of the rear-axle wheel brakes (3), a central module (7), an electro-pneumatic service-brake valve (4), wherein the service-brake valve (4) is designed to output an electric service-brake actuating signal (S4) to the central module (7) as a function of a service-brake braking specification (VB),
wherein the central module (7) is connected in a signal-conducting manner to the front-axle pressure modulator (6) and to the rear-axle pressure modulator (11) for transmitting control signals (S2, S3), which are dependent on the service-brake actuating signal (S4), to the pressure modulators (6, 11),
wherein the service-brake valve (4) is furthermore designed to output a pneumatic service-brake control pressure (pV; pR) as a function of the service-brake braking specification (VB), wherein, in the event of redundancy, the front-axle pressure modulator (6) is activatable via a redundancy connection (6a) with a front-axle service-brake control pressure (pV),
wherein the brake system (1) furthermore has a parking-brake valve (5) and the parking-brake valve (5) outputs a parking-brake control pressure (p5) to a second control input (12b) of a control valve (12) as a function of a parking-brake braking specification (VP), wherein the control valve (12) can set a spring-loaded brake pressure (p3b) at a working output (12c) of the control valve (12) as a function of the parking-brake control pressure (p5) and the working output (12c) of the control valve (12) is connected to spring-loaded parts (3b) of the rear-axle wheel brakes (3) for also setting the spring-loaded brake pressure (p3b) at the spring-loaded parts (3b) of the rear-axle wheel brakes (3),
**characterized in that**
the control valve (12) for setting the spring-loaded brake pressure (p3b) is a control valve (12) according to one of the preceding claims, wherein the service-brake valve (4) is connectable pneumatically to a first control input (12a) of the control valve (12) for transmitting the service-brake control pressure (pV; pR) to the control valve (12) and for setting a spring-loaded brake pressure (p3b) at the spring-loaded parts (3b) of the rear-axle wheel brakes (3) as a function of the parking-brake control pressure (p5) and/or of the service-brake control pressure (pV; pR) .

18. Electronically controllable brake system (1) according to Claim 17, **characterized in that** the central module (7) is connected in a signal-conducting manner to a switch-over valve (26), which is integrated in the control valve (12) or is connected upstream of the first control input (12a), for optionally connecting the service-brake valve (4) to the first control chamber (14a) of the control valve (12) or the atmosphere (A) to the first control chamber (14a) of the control valve (12), wherein, during normal operation without there being a defect or a failure in the electric activation of the rear-axle pressure modulator (11), it can be predetermined via a switching-over signal (S1) transmitted to the switch-over valve (26) that the atmosphere (A) is connected to the first control chamber (14a) and otherwise the service-brake valve (4) is connected to the first control chamber (14a).

19. Electronically controllable brake system (1) according to Claim 17 or 18, **characterized in that** the service-brake valve (4) is formed with a single channel, and the front-axle control pressure (pV) which is supplied to the front-axle pressure modulator (6) by the service-brake valve (4) can also be supplied via a branch line (13) to the first control input (12a) of the control valve (12), or the service-brake valve (4) is formed with two channels, wherein a first channel (K1) is connected to the redundancy connection (6a) of the front-axle pressure modulator (6) for pneumatically activating the front-axle pressure modulator (6) with the front-axle service-brake control pressure (pV) and a second channel (K2) is connected to the first control input (12a) of the control valve (12) for transmitting a redundancy control pressure (pR) produced in the service-brake valve (4) to the control valve (12).

20. Method for controlling an electrically controllable brake system (1) according to one of Claims 17 to 19, wherein, when an electric defect or a failure in the electric activation of the rear-axle wheel brakes (3) is detected, the service-brake valve (4) is connected to the first control chamber (14a) by the membrane part (3c) (St0), and therefore a spring-loaded brake pressure (p3b) which is dependent on the service-brake control pressure (pV; pR) can be set (Stla) at the spring-loaded parts (3b) of the rear-axle wheel brakes (3), wherein the spring-loaded brake pressure (p3b) is predetermined in the control valve (12) as a function of a switching position (B1, B2) of a bypass valve (27), wherein different compressive forces (X1, X2) act on the first control piston (15a) depending on the switching position (B1, B2) of the bypass valve (27) .

21. Method according to Claim 20, **characterized in that** the bypass valve (27) is switched over in the control valve (12) as a function of a defined limit pressure (pG) in the first control chamber (14a), wherein the first control chamber (14a) is connected to the third control chamber (14c) via the bypass valve (27) if, during pressurization of the first control chamber (14a) with the service-brake control pressure (pV; pR), the service-brake control pressure (pV; pR) exceeds the defined limit pressure (pG), and the first control chamber (14a) is not connected to the third control chamber (14c) via the bypass valve (27) if the service-brake control pressure (pV; pR) falls below the defined limit pressure (pG).

22. Method according to Claim 20 or 21, **characterized in that** the central module (7) predetermines for the switch-over valve (27) during normal operation without detection of an electric defect or a failure in the electric activation of the rear-axle wheel brakes (3) by the membrane part (3c) (St0), via the switching-over signal (S1) that the first control chamber (14a) is connected (Stla) to the atmosphere (A).

## Revendications

1. Vanne de commande (12) destinée à commander une pression de freinage d'accumulateur à ressort (p3b) au niveau de parties d'accumulateur à ressort (3b) d'un frein de roue d'essieu arrière (3), la vanne de commande (12) pouvant être commandée pneumatiquement avec une pression de commande de frein de stationnement (p5) par le biais d'une deuxième entrée de commande (12b), la pression de commande de frein de stationnement (p5) pouvant agir sur des moyens de commande (14b, 15b, 17c, 22, 23, 24) disposés dans un boîtier de vanne (12f) de la vanne de commande (12) de telle sorte qu'une pression de freinage d'accumulateur à ressort (p3b) s'établit au niveau d'une sortie de travail (12c) de la vanne de commande (12) en fonction de la pression de commande de frein de stationnement (p5) en vue de convertir une consigne de freinage de frein de stationnement (VP) avec les parties d'accumulateur à ressort (3b) des freins de roue d'essieu arrière (3),
**caractérisée en ce que**
la vanne de commande (12) possède en outre une première entrée de commande (12a) destinée à commander la vanne de commande (12) avec une pression de commande de frein de service (pV ; pR) dépendante d'une consigne de freinage de frein de service (VB), la première entrée de commande (12a) pouvant être reliée à cet effet à un premier espace de commande (14a) variable, le premier espace de commande (14a) se trouvant en liaison fonctionnelle avec les moyens de commande (14b, 15b, 17c, 22, 23, 24) disposés dans la vanne de commande (12) par le biais d'un premier piston de commande (15a), de telle sorte que la pression de freinage d'accumulateur à ressort (p3b) au niveau de la sortie de travail (12c) peut être réglée en fonction de la pression de commande de frein de service (pV ; pR) et/ou de la pression de commande de frein de stationnement (p5) lors d'une variation du premier espace de commande (14a) résultant d'une mise en pression avec la pression de commande de frein de service (pV ; pR), le premier piston de commande (15a) se trouvant en outre en liaison fonctionnelle avec un troisième espace de commande (14c), le premier piston de commande (15a),
- dans le cas d'une sollicitation en pression du premier espace de commande (14a) avec la pression de commande de frein de service (pV ; pR), étant soumis à une première force de pressage (X1) agissant dans une première direction (R1), et
- dans le cas d'une sollicitation en pression du troisième espace de commande (14c) avec la même pression de commande de frein de service (pV ; pR), étant soumis à une deuxième force de pressage (X2) agissant dans une deuxième direction (R2) opposée à la première direction (R1),
le premier espace de commande (14a) pouvant être relié au troisième espace de commande (14c) par le biais d'une vanne de dérivation (27) commutable en vue de soumettre les deux espaces de commande (14a, 14c) à la même pression de commande de frein de service (pV ; pR).

2. Vanne de commande (12) selon la revendication 1, **caractérisée en ce que** le premier espace de commande (14a) est séparé du troisième espace de commande (14c) par une première paroi (17a) reliée au premier piston de commande (15a) et la pression de commande de frein de service (pV ; pR) agit dans le premier espace de commande (14a) sur une première surface (F1) de la première paroi (17a) et la pression de commande de frein de service (pV ; pR), suivant la position de commutation (B1, B2) de la vanne de dérivation (27), agit dans le troisième espace de commande (14c) sur une deuxième surface (F2) de la première paroi (17a).

3. Vanne de commande (12) selon la revendication 2, **caractérisée en ce que** la première surface (F1) est plus grande que la deuxième surface (F2), de sorte que lorsque le premier piston de commande (14a) est sollicité en pression avec la pression de commande de frein de service (pV ; pR), une première force de pressage (X1) agit sur le premier piston de commande (15a) dans la première direction (R1), laquelle est supérieure à une deuxième force de pressage (X2) sur le premier piston de commande (15a) dans la deuxième direction (R2) dans le cas d'une sollicitation en pression simultanée du troisième espace de commande (14c) avec la même pression de commande de frein de service (pV ; pR).

4. Vanne de commande (12) selon la revendication 3, **caractérisée en ce qu'**un élément de piston (28) est disposé sur la deuxième surface (F2) de la première paroi (17a), l'élément de piston (28) faisant saillie à travers le troisième espace de commande (14c) de telle sorte que la deuxième surface (F2) sur la première paroi (17a) est réduite, la deuxième force de pressage (X2) sur le premier piston de commande (15a) dans le cas d'une sollicitation en pression du troisième espace de commande (14c) avec la pression de commande de frein de service (pV ; pR) étant produite uniquement par l'effet de la pression de commande de frein de service (pV ; pR) sur la deuxième surface (F2) réduite de l'élément de piston (28) .

5. Vanne de commande (12) selon l'une des revendications précédentes, **caractérisée en ce que** la vanne de dérivation (27) peut être permutée en fonction d'une pression limite (pG) spécifiée dans le premier espace de commande (14a), le premier espace de commande (14a) étant relié au troisième espace de commande (14c) par le biais de la vanne de dérivation (27) lorsque, dans le cas d'une sollicitation en pression du premier espace de commande (14a) avec la pression de commande de frein de service (pV ; pR), la pression de commande de frein de service (pV ; pR) dépasse la pression limite (pG) spécifiée, et le premier espace de commande (14a) n'étant pas relié au troisième espace de commande (14c) par le biais de la vanne de dérivation (27) lorsque la pression de commande de frein de service (pV ; pR) devient inférieure à la pression limite (pG) spécifiée, la pression limite (pG) étant de préférence comprise entre 0,5 bar et 0,7 bar.

6. Vanne de commande (12) selon l'une des revendications précédentes, **caractérisée en ce que** la vanne de dérivation (27) peut être permutée par commande en pression.

7. Vanne de commande (12) selon la revendication 6, **caractérisée en ce que** la vanne de dérivation (27) possède un piston de commande de dérivation (27d), le piston de commande de dérivation (27d) pouvant être positionné en vue de permuter la vanne de dérivation (27) en fonction d'une pression de commande de dérivation (p27) qui agit dans un espace de commande de dérivation (27g) ainsi qu'en fonction d'une pression de permutation (pU) qui agit dans un espace de pression de dérivation (27a), la pression de permutation (pU) correspondant à la pression dans le premier espace de commande (14a) et le piston de commande de dérivation (27d) se trouvant avec des zones différentes dans l'espace de commande de dérivation (27g) et dans l'espace de pression de dérivation (27a) de telle sorte que la pression de commande de dérivation (p27) agit sur le piston de commande de dérivation (27d) dans la direction opposée à la pression de permutation (pU).

8. Vanne de commande (12) selon l'une des revendications 5 à 7, **caractérisée en ce que** le piston de commande de dérivation (27d) se soulève d'un siège d'admission (27f) dès que la pression de permutation (pU) dépasse la pression limite (pG) et le premier espace de commande (14a) est ainsi relié au troisième espace de commande (14c).

9. Vanne de commande (12) selon la revendication 7 ou 8, **caractérisée en ce que** l'espace de commande de dérivation (27g) est relié à la sortie de travail (12c) de la vanne de commande (12) par le biais d'une entrée de commande de dérivation (27i) en vue d'acheminer la pression de freinage d'accumulateur à ressort (p3b) en tant que pression de commande de dérivation (p27).

10. Vanne de commande (12) selon l'une des revendications précédentes, **caractérisée en ce que** les moyens de commande sont formés par un deuxième espace de commande (14b) variable ainsi que par un deuxième piston de commande (15b) positionnable, la pression de commande de frein de stationnement (p5) pouvant être introduite dans le deuxième espace de commande (14b) par le biais de la deuxième entrée de commande (12b) et le deuxième piston de commande (15b) pouvant être positionné dans une première direction (R1) et/ou dans une deuxième direction (R2) opposée à la première direction (R1) par une action de la pression de commande de frein de stationnement (p5) sur le deuxième piston de commande (15b),
le deuxième espace de commande (14b) étant notamment délimité par une troisième paroi (17c) disposée au niveau du deuxième piston de commande (15b) positionnable, la troisième paroi (17c) étant mobile par rapport au boîtier de vanne (12f) de telle sorte que la deuxième piston de commande (15b) peut être positionné par une action de la pression de commande de frein de stationnement (p5) sur la troisième paroi (17c).

11. Vanne de commande (12) selon la revendication 10, **caractérisée en ce que** le premier piston de commande (15a) se trouve en liaison fonctionnelle avec le deuxième piston de commande (15b) de telle sorte que le deuxième piston de commande (15b) est emporté au moins dans certaines zones par un positionnement du premier piston de commande (15a).

12. Vanne de commande (12) selon la revendication 11, **caractérisée en ce que** le premier espace de commande (14a) est délimité par une première paroi (17a) mobile par rapport à un boîtier de vanne (12f) ainsi que par une deuxième paroi (17b) reliée à demeure au boîtier de vanne (12f), le premier piston de commande (15a) étant relié à la première paroi (17a) de telle sorte que le premier piston de commande (15a) ainsi que le deuxième piston de commande (15b) qui se trouve en liaison fonctionnelle avec celui-ci sont poussés dans une première direction (R1) par une augmentation de pression dans le premier espace de commande (14a), le deuxième espace de commande (14b) étant notamment disposé par rapport au premier espace de commande (14a) de telle sorte que le deuxième piston de commande (15b) ainsi que le premier piston de commande (15a) qui se trouve en liaison fonctionnelle avec celui-ci sont poussés dans la deuxième direction (R2) dans le cas d'une augmentation de pression dans le deuxième espace de commande (14b) lorsque le premier espace de commande (14a) et/ou le troisième espace de commande (14c) sont reliés à l'atmosphère (A).

13. Vanne de commande (12) selon la revendication 12, **caractérisée en ce que** le deuxième espace de commande (14b) est également délimité par la deuxième paroi (17b) reliée à demeure au boîtier de vanne (12f), le deuxième piston de commande (15b) étant poussé à l'écart de la deuxième paroi (17b) dans la deuxième direction (R2) dans le cas d'une augmentation de pression dans le deuxième espace de commande (14b) et le premier piston de commande (15a) étant poussé à l'écart de la deuxième paroi (17b) dans la première direction (R1) dans le cas d'une augmentation de pression dans le premier espace de commande (14a).

14. Vanne de commande (12) selon l'une des revendications 10 à 13, **caractérisée en ce que** le premier espace de commande (14a) et le deuxième espace de commande (14b) coopèrent entre eux par le biais des pistons de commande (15a, 15b) de telle sorte qu'à la sortie de travail (12c) s'établit une pression de freinage d'accumulateur à ressort (p3b) qui est dépendante de la pression de commande de frein de stationnement (p5) qui règne dans le deuxième espace de commande (14b) et/ou de la pression de commande de frein de service (pV ; pR) qui règne dans le premier espace de commande (14a), notamment suivant la consigne de freinage (VB, VP) associée aux pressions de commande (p5, pV ; pR) qui est la plus élevée.

15. Vanne de commande (12) selon l'une des revendications 10 à 14, **caractérisée en ce que** les moyens de commande présents sont en outre un corps de vanne (22) mobile dans le sens axial et précontraint par un ressort de compression (23), la sortie de travail (12c) pouvant être reliée par le biais d'un espace de pression (16), suivant le positionnement axial du corps de vanne (22), soit à un raccord de purge d'air (12e) en vue de réduire la pression de freinage d'accumulateur à ressort (p3b), soit à un raccord d'alimentation (12d) en vue d'augmenter la pression de freinage d'accumulateur à ressort (p3b), le deuxième piston de commande (15b) pouvant positionner axialement le corps de vanne (22) en fonction de la pression de commande de frein de stationnement (p5) et/ou de la pression de commande de frein de service (pV ; pR).

16. Vanne de commande (12) selon l'une des revendications précédentes, **caractérisée en ce que** la vanne de commande (12) coopère avec une vanne de permutation (26) commutable de telle sorte que le premier espace de commande (14a) peut être relié à une vanne de frein de service (4) en vue de prédéfinir une pression de commande de frein de service (pV ; pR) dans le premier espace de commande (14a) ou peut être reliée à une atmosphère (A) en vue de purger l'air du premier espace de commande (14a), la vanne de permutation (26) étant intégrée dans la vanne de commande (12) ou étant branchée en amont de la première entrée de commande (12a) de la vanne de commande (12).

17. Système de freinage (1) à commande électronique comprenant des freins de roue d'essieu avant (2), des freins de roue d'essieu arrière (3) ayant une partie d'accumulateur à ressort (3b) et une partie de membrane (3c), un modulateur de pression d'essieu avant (6) à commande électropneumatique destiné à délivrer une pression de freinage d'essieu avant (p2) aux freins de roue d'essieu avant (2), un modulateur de pression d'essieu arrière (11) à commande électropneumatique destiné à délivrer une pression de freinage de membrane (p3c) aux parties de membrane (3c) des freins de roue d'essieu arrière (3), un module central (7), une vanne de frein de service (4) électropneumatique,
la vanne de frein de service (4) étant configurée pour délivrer un signal d'actionnement de frein de service (S4) au module central (7) en fonction d'une consigne de freinage de frein de service (VB),
le module central (7) étant relié signalétiquement au modulateur de pression d'essieu avant (6) et au modulateur de pression d'essieu arrière (11) pour la transmission de signaux de commande (S2, S3) dépendant du signal d'actionnement de frein de service (S4) aux modulateurs de pression (6, 11),
la vanne de frein de service (4) étant en outre configurée pour délivrer une pression de commande de frein de service (pV ; pR) en fonction de la consigne de freinage de frein de service (VB), le modulateur de pression d'essieu avant (6) pouvant, en cas de redondance, être commandé avec une pression de commande de frein de service d'essieu avant (pV) par le biais d'un raccord de redondance (6a),
le système de freinage (1) possédant en outre une vanne de frein de stationnement (5) et la vanne de frein de stationnement (5) délivrant une pression de commande de frein de stationnement (p5) à une deuxième entrée de commande (12b) d'une vanne de commande (12) en fonction d'une consigne de freinage de frein de stationnement (VP), la vanne de commande (12) pouvant régler une pression de freinage d'accumulateur à ressort (p3b) au niveau d'une sortie de travail (12c) de la vanne de commande (12) en fonction de la pression de commande de frein de stationnement (p5) et la sortie de travail (12c) de la vanne de commande (12) étant reliée à des parties d'accumulateur à ressort (3b) des freins de roue d'essieu arrière (3) en vue de régler la pression de freinage d'accumulateur à ressort (p3b) également au niveau des parties d'accumulateur à ressort (3b) des freins de roue d'essieu arrière (3),
**caractérisé en ce que** la vanne de commande (12) destinée à régler la pression de freinage d'accumulateur à ressort (p3b) est une vanne de commande (12) selon l'une des revendications précédentes, la vanne de frein de service (4) pouvant être reliée pneumatiquement à la première entrée de commande (12a) de la vanne de commande (12) en vue de transmettre la pression de commande de frein de service (pV ; pR) à la vanne de commande (12) et de régler une pression de freinage d'accumulateur à ressort (p3b) au niveau des parties d'accumulateur à ressort (3b) des freins de roue d'essieu arrière (3) en fonction de la pression de commande de frein de stationnement (p5) et/ou de la pression de commande de frein de service (pV ; pR).

18. Système de freinage (1) à commande électronique selon la revendication 17, **caractérisé en ce que** le module central (7) est relié signalétiquement à une vanne de permutation (26) intégrée dans la vanne de commande (12) ou branchée en amont de la première entrée de commande (12a) en vue de relier sélectivement la vanne de frein de service (4) au premier espace de commande (14a) de la vanne de commande (12) ou l'atmosphère (A) au premier espace de commande (14a) de la vanne de commande (12), le fait que l'atmosphère (A) est reliée au premier espace de commande (14a) et sinon la vanne de frein de service (4) au premier espace de commande (14a) pouvant être prédéfini en fonctionnement normal, sans la présence d'un défaut ou d'une panne, par le biais d'un signal de permutation (S1) communiqué à la vanne de permutation (26) lors d'une commande électrique du modulateur de pression d'essieu arrière (11).

19. Système de freinage (1) à commande électronique selon la revendication 17 ou 18, **caractérisé en ce que** la vanne de frein de service (4) est réalisée avec un canal unique et la pression de commande d'essieu avant (pV) acheminée au modulateur de pression d'essieu avant (6) par la vanne de frein de service (4) peut également être acheminée à la première entrée de commande (12a) de la vanne de commande (12) à travers une ramification (13), ou alors la vanne de frein de service (4) est réalisée avec deux canaux, un premier canal (K1) étant relié au raccord de redondance (6a) du modulateur de pression d'essieu avant (6) en vue de la commande pneumatique du modulateur de pression d'essieu avant (6) avec la pression de commande de frein de service d'essieu avant (pV) et un deuxième canal (K2) étant relié à la première entrée de commande (12a) de la vanne de commande (12) en vue de transmettre à la vanne de commande (12) une pression de commande de redondance (pR) générée dans la vanne de frein de service (4).

20. Procédé pour commander un système de freinage (1) à commande électronique selon l'une des revendications 17 à 19, la vanne de frein de service (4), lors de la constatation d'un défaut électrique ou d'une panne lors de la commande électrique des freins de roue d'essieu arrière (3), étant reliée au premier espace de commande (14a) par le biais de la partie de membrane (3c) (St0), de sorte qu'une pression de freinage d'accumulateur à ressort (p3b) dépendante de la pression de commande de frein de service (pV ; pR) puisse être réglée au niveau de parties d'accumulateur à ressort (3b) des freins de roue d'essieu arrière (3) (St1a), la pression de freinage d'accumulateur à ressort (p3b) étant prédéfinie en fonction d'une position de commutation (B1, B2) d'une vanne de dérivation (27) dans la vanne de commande (12), des forces de pression (X1, X2) différentes agissant sur le premier piston de commande (15a) en fonction de la position de commutation (B1, B2) de la vanne de dérivation (27).

21. Procédé selon la revendication 20, **caractérisé en ce que** la vanne de dérivation (27) dans la vanne de commande (12) est permutée en fonction d'une pression limite (pG) spécifiée dans le premier espace de commande (14a), le premier espace de commande (14a) étant relié au troisième espace de commande (14c) par le biais de la vanne de dérivation (27) lorsque, dans le cas d'une sollicitation en pression du premier espace de commande (14a) avec la pression de commande de frein de service (pV ; pR), la pression de commande de frein de service (pV ; pR) dépasse la pression limite (pG) spécifiée, et le premier espace de commande (14a) n'étant pas relié au troisième espace de commande (14c) par le biais de la vanne de dérivation (27) lorsque la pression de commande de frein de service (pV ; pR) devient inférieure à la pression limite (pG) spécifiée.

22. Procédé selon la revendication 20 ou 21, **caractérisé en ce que** le module central (7) indique à la vanne de permutation (27), par le biais du signal de permutation (S1), le fait que le premier espace de commande (14a) est relié (St1a) à l'atmosphère (A) en fonctionnement normal, sans la présence d'un défaut électrique ou d'une panne lors de la commande électrique des freins de roue d'essieu arrière (3) par la partie de membrane (3c) (St0).
